# EUROPEAN PATENT SPECIFICATION

(11) **EP 4 012 299 B1**
(45) Date of publication and mention of the grant of the patent: **22.04.2026**
(21) Application number: 19940945.9
(22) Date of filing: 07.08.2019
(51) Int. Cl.: F25B 47/02, F24F 11/41, F25B 1/00, F24F 140/20, F24F 11/42, F24F 11/86, F25B 13/00, F25B 25/00

(54) **CHILLING UNIT**
KÜHLEINHEIT
UNITÉ DE REFROIDISSEMENT

(43) Date of publication of application: 15.06.2022
(73) Proprietor: MITSUBISHI ELECTRIC CORPORATION, Chiyoda-ku Tokyo 100-8310 (JP)
(72) Inventor: KAWANO, Kosuke, Tokyo 100-8310 (JP); HIKONE, Takahito, Tokyo 100-8310 (JP); KADOWAKI, Kimitaka, Tokyo 100-8310 (JP)
(74) Representative: Witte, Weller & Partner Patentanwälte mbB
(86) International application number: PCT/JP2019/031081
(87) International publication number: WO 2021/024404

(56) References cited:
- EP-A1- 3 228 951
- WO-A1-2013/151005
- WO-A1-2017/145762
- WO-A1-2017/217383
- WO-A1-2018/211682
- JP-A- 2010 181 146
- JP-A- 2013 036 683
- JP-A- 2013 036 683
- JP-A- 2017 129 357
- JP-A- H10 300 265

## Description

### Technical Field

The present invention relates to a chilling unit including a refrigerant circuit and a heat medium circuit and relates to an air-conditioning system.

### Background Art

A known chilling unit includes multiple refrigerant circuits enclosed in a single casing. Patent Literature 1 discloses a heat source unit including a first water heat exchanger connected to a first refrigeration cycle and a second refrigeration cycle and a second water heat exchanger connected to a third refrigeration cycle and a fourth refrigeration cycle. The first water heat exchanger and the second water heat exchanger are connected in series by a water pipe. As described in Patent Literature 1, the refrigeration cycles are independent of each other and are arranged in a fan chamber. A defrosting operation is performed in each of the refrigeration cycles. Patent Literature 1 describes a dual-circuit configuration in which a common water heat exchanger is shared by two refrigeration cycles and in which a cooling operation and a heating operation are performed in a mixed manner.

Patent Literature 2, according to its abstract, states that, to provide a warming device that performs reverse cycle defrosting in a short time without discharging water whose temperature is lower than a predetermined tapping temperature to a use side such as a hot-water storage tank, a hot-water faucet, a buffer tank on use side, or the like, and without freezing water in a water circuit, the warming device includes a plurality of refrigeration cycles including a water and refrigerant heat exchanger performing heat exchange of a refrigerant discharged from a compressor and water, and a water circuit serially circulating water to a water side passage of the water and refrigerant heat exchanger in the plurality of refrigeration cycles. A pump is provided in the water circuit. The warming device includes: a bypass circuit for connecting a downstream side of the water/refrigerant heat exchanger of the refrigeration cycle located on the lowermost stream side in the water circuit, and an upstream side of the water/refrigerant heat exchanger of the refrigeration cycle located in the uppermost side; and an opening/closing control means for opening and closing the bypass circuit.

Document JP 2013 036683 A discloses a chilling unit according to the preamble of claim 1.

Patent Literature 3, according to its abstract, states that a chilling unit and a water-circulating temperature-adjustment system are provided with: a refrigerant circuit including a compressor, a pair of air-side heat exchangers, an expansion valve, and a heat medium-side heat exchanger which are connected by piping to circulate refrigerant; piping for circulating heat medium; a flow passageway switching device for switching the circulation path of refrigerant; a temperature sensor; pressure sensors; and a control device. The control device controls the compressor on the basis of a target exit temperature that is set in advance, a heat medium temperature measured by means of the temperature sensor, and a pressure difference of the heat medium measured by means of the pressure sensors. If the load of a load-side apparatus becomes a low load less than or equal to a lowest capacity of the compressor, start-stop avoidance control is implemented in a state in which the lowest capacity operation of the compressor is maintained, and one of the pair of air-side heat exchangers and the heat medium-side heat exchanger are connected in parallel by means of the flow passageway switching device.

### Citation List

### Patent Literature

Patent Literature 1: JP 2017 129357 A
Patent Literature 2: JP 2013 036683 A
Patent Literature 3: WO 2018/211682 A1

### Summary of Invention

### Technical Problem

In the heat source unit disclosed in Patent Literature 1 in which each common water heat exchanger is shared by two refrigeration cycles, while the cooling operation or the defrosting operation and the heating operation are performed in a mixed manner, hot water and cold water flow through the water pipe. This causes cooling of an air-conditioning target space in which the heating operation is required.

In response to the above issue, it is an object of the present invention to provide a chilling unit and an air-conditioning system that inhibit cooling of an air-conditioning target space in which the heating operation is required.

### Solution to Problem

According to the present invention, a chilling unit as defined in claim 1 provided. Further embodiments of the invention are defined in the dependent claims. Although the invention is only defined by the claims, the below embodiments, examples, and aspects are present for aiding in understanding the background and advantages of the invention.

### Advantageous Effects of Invention

According to the embodiment of the present invention, when the temperature of the heat medium is at or below the temperature threshold, the increasing unit is configured to increase the operating frequency of the first compressor, the second compressor, the third compressor, or the fourth compressor. Thus, for example, even in an operation in which a defrosting operation and a heating operation are performed in a mixed manner, heating capacity can be increased to increase the temperature of the heat medium. This inhibits an air-conditioning target space in which the heating operation is required from cooling even in the operation in which a cooling operation or the defrosting operation and the heating operation are performed in a mixed manner.

### Brief Description of Drawings

[Fig. 1] Fig. 1 is a perspective view of a chilling unit according to Embodiment 1.
[Fig. 2] Fig. 2 is a side view of the chilling unit according to Embodiment 1.
[Fig. 3] Fig. 3 is a perspective view of a machine chamber illustrating the chilling unit according to Embodiment 1.
[Fig. 4] Fig. 4 is a schematic diagram illustrating the placement of a first heat-source heat exchanger in the chilling unit according to Embodiment 1.
[Fig. 5] Fig. 5 is a circuit diagram illustrating the chilling unit according to Embodiment 1.
[Fig. 6] Fig. 6 is a top plan view of the chilling unit according to Embodiment 1.
[Fig. 7] Fig. 7 is a rear perspective view illustrating a first refrigerant-to-heat medium heat exchanger and a third refrigerant-to-heat medium heat exchanger in Embodiment 1.
[Fig. 8] Fig. 8 is a schematic diagram illustrating a first intermediate temperature detecting unit in Embodiment 1.
[Fig. 9] Fig. 9 is a functional block diagram of a controller in Embodiment 1.
[Fig. 10] Fig. 10 is a timing chart illustrating an operation of the controller in Embodiment 1.
[Fig. 11] Fig. 11 is a flowchart illustrating the operation of the controller in Embodiment 1.
[Fig. 12] Fig. 12 is a perspective view illustrating a plurality of chilling units according to Embodiment 2.
[Fig. 13] Fig. 13 is a schematic diagram illustrating the plurality of chilling units according to Embodiment 2.

### Description of Embodiments

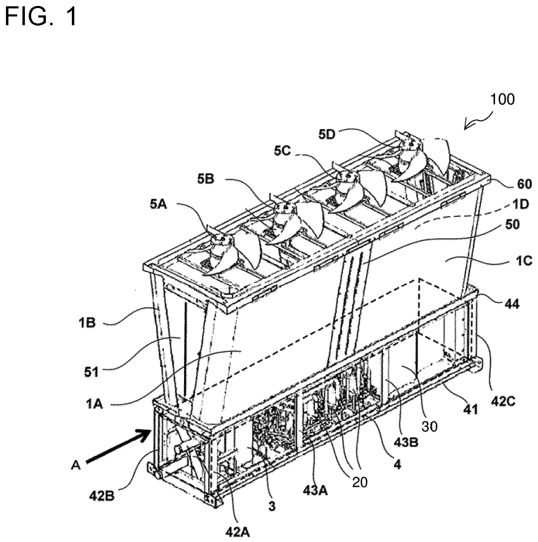

Embodiments of a chilling unit and an air-conditioning system according to the present invention will be described below with reference to the drawings. Note that the following embodiments should not be construed as limiting the present invention. Furthermore, note that the relationship between the sizes of components in the following figures including Fig. 1 may differ from that between the actual sizes of the components. For the sake of easy understanding, terms representing directions will be used as appropriate. These terms are used herein only for the purpose of convenience of description, and should not be construed as limiting the present invention. Examples of the terms representing the directions include "upper", "lower", "right", "left", "front", and "rear".

### Embodiment 1.

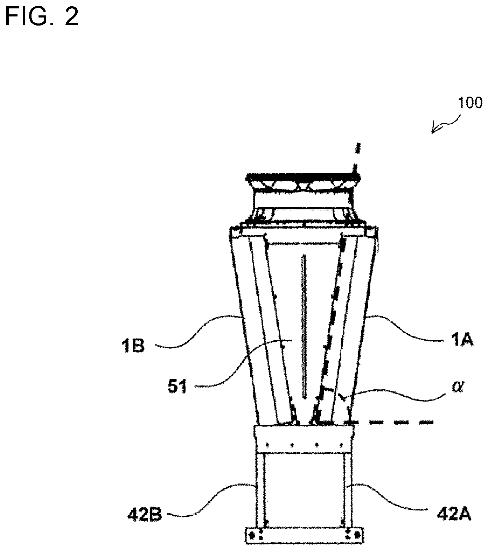

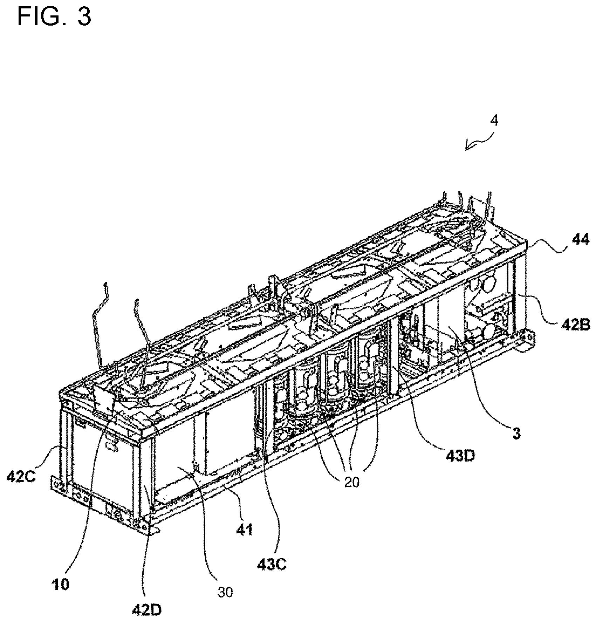

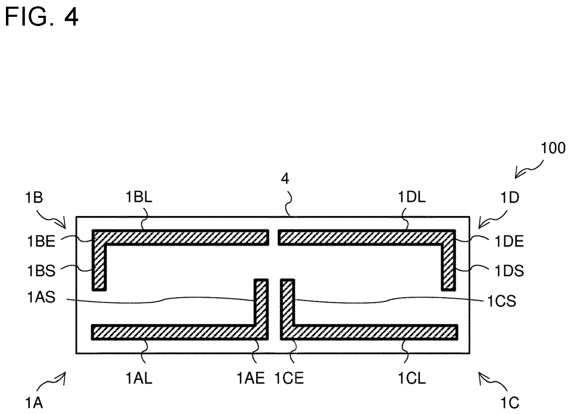

Fig. 1 is a perspective view of a chilling unit 100 according to Embodiment 1. Fig. 2 is a side view of the chilling unit 100 according to Embodiment 1. Fig. 3 is a perspective view of a machine chamber 4 illustrating the chilling unit 100 according to Embodiment 1. Fig. 4 is a schematic diagram illustrating the placement of a first heat-source heat exchanger 1A in the chilling unit 100 according to Embodiment 1. Fig. 2 illustrates the chilling unit 100 as viewed in the direction of an arrow A in Fig. 1. Fig. 3 illustrates the machine chamber 4 as viewed from where the opposite side of the chilling unit from that illustrated in Fig. 2 is disposed. Fig. 4 illustrates the first heat-source heat exchanger 1A, a second heat-source heat exchanger 1B, a third heat-source heat exchanger 1C, and a fourth heat-source heat exchanger 1D as viewed from above the chilling unit 100. The chilling unit 100 according to Embodiment 1 receives a heat medium, such as water or antifreeze, from a use-side unit (not illustrated). The heat medium is cooled or heated in the chilling unit 100 and is then sent and supplied to the use-side unit. The circulation of the heat medium causes the use-side unit to be supplied with cooling energy or heating energy.

As illustrated in Figs. 1 to 4, the chilling unit 100 includes the first heat-source heat exchanger 1A, the second heat-source heat exchanger 1B, the third heat-source heat exchanger 1C, and the fourth heat-source heat exchanger 1D, which are included in a refrigeration cycle on a heat source side. The chilling unit 100 further includes a first fan 5A, a second fan 5B, a third fan 5C, and a fourth fan 5D. The chilling unit 100 has the machine chamber 4, which has a cuboid shape.

A top frame 60 is disposed above the first heat-source heat exchanger 1A, the second heat-source heat exchanger 1B, the third heat-source heat exchanger 1C, and the fourth heat-source heat exchanger 1D. The top frame 60 has the first fan 5A, the second fan 5B, the third fan 5C, and the fourth fan 5D. Each of the first fan 5A, the second fan 5B, the third fan 5C, and the fourth fan 5D is covered with a fan guard (not illustrated).

In Fig. 1, a dashed line represents a space occupied by the machine chamber 4. The machine chamber 4 has a support 41, four pillars, four intermediate columns, and an upper beam 44. The four pillars are a pillar 42A, a pillar 42B, a pillar 42C, and a pillar 42D. The four intermediate columns are an intermediate column 43A, an intermediate column 43B, an intermediate column 43C, and an intermediate column 43D. The support 41 is a rectangular flat part. The pillars 42A, 42B, 42C, and 42D are arranged at four corners of the support 41 and extend perpendicularly to the support 41. The intermediate columns 43A and 43B are spaced apart between the pillars 42A and 42C in a longitudinal direction of the support 41.

The intermediate columns 43C and 43D are spaced apart between the pillars 42B and 42D in the longitudinal direction of the support 41. The intermediate columns 43A, 43B, 43C, and 43D extend perpendicularly to the support 41. The upper beam 44 is disposed on the pillars 42A, 42B, 42C, and 42D and the intermediate columns 43A, 43B, 43C, and 43D. The machine chamber 4 contains multiple essential devices. The devices contained in the machine chamber 4 include a first refrigerant-to-heat medium heat exchanger 3A, a first compressor 20A included in a first refrigerant circuit 19A, and a controller 30. The pillars 42A, 42B, 42C, and 42D may be collectively referred to as pillars 42. Additionally, the intermediate columns 43A, 43B, 43C, and 43D may be collectively referred to as intermediate columns 43.

Furthermore, as illustrated in Fig. 2, the first heat-source heat exchanger 1A and the second heat-source heat exchanger 1B facing each other in a lateral direction of the machine chamber 4 are inclined such that the distance between ends of the heat exchangers remote from the machine chamber 4 is larger than the distance between ends of the heat exchangers adjacent to the machine chamber 4. In other words, the first heat-source heat exchanger 1A and the second heat-source heat exchanger 1B are inclined to form a V-shape as viewed from the side of the chilling unit 100. The third heat-source heat exchanger 1C and the fourth heat-source heat exchanger 1D facing each other in the lateral direction of the machine chamber 4 are also similarly inclined to form a V-shape. In Embodiment 1, the first heat-source heat exchanger 1A is inclined at an angle α of from 65 to 80 degrees. The second heat-source heat exchanger 1B, the third heat-source heat exchanger 1C, and the fourth heat-source heat exchanger 1D are inclined at the same angle as the angle α.

As illustrated in Fig. 3, the upper beam 44 of the machine chamber 4 has a base 10. The base 10 is supported by the pillars 42 and the intermediate columns 43. The base 10 has multiple rubber sheets. The first heat-source heat exchanger 1A, the second heat-source heat exchanger 1B, the third heat-source heat exchanger 1C, and the fourth heat-source heat exchanger 1D are arranged on the base 10, with the rubber sheets placed therebetween. The first heat-source heat exchanger 1A, the second heat-source heat exchanger 1B, the third heat-source heat exchanger 1C, and the fourth heat-source heat exchanger 1D are inclined in the above-described manner. A side panel 50 is disposed between the first heat-source heat exchanger 1A and the third heat-source heat exchanger 1C. A side panel 51 is disposed between the first heat-source heat exchanger 1A and the second heat-source heat exchanger 1B. In addition, a side panel (not illustrated) similar to the side panel 50 is disposed between the second heat-source heat exchanger 1B and the fourth heat-source heat exchanger 1D. Additionally, a side panel (not illustrated) similar to the side panel 51 is disposed between the third heat-source heat exchanger 1C and the fourth heat-source heat exchanger 1D.

The first heat-source heat exchanger 1A, the second heat-source heat exchanger 1B, the third heat-source heat exchanger 1C, and the fourth heat-source heat exchanger 1D are parallel-flow heat exchangers, and each include a pair of headers, multiple aluminum flat tubes, and multiple corrugated fins. The aluminum flat tubes are arranged between the pair of headers and are connected at opposite ends to the headers. The aluminum flat tubes are spaced apart parallel to each other between the pair of headers such that flat portions of the tubes face each other. The corrugated fins are arranged between the facing flat portions of the aluminum flat tubes.

As illustrated in Fig. 4, the first to fourth heat-source heat exchangers 1A to 1 D are bent at an angle of 90 degrees such that, when viewed in a direction orthogonal to the aluminum flat tubes, a portion of each aluminum flat tube that is located at a slight distance from the middle thereof in a longitudinal direction thereof is bent. In other words, the first heat-source heat exchanger 1A, the second heat-source heat exchanger 1B, the third heat-source heat exchanger 1C, and the fourth heat-source heat exchanger 1 D are L-shaped when viewed from where first ends of the headers are located. The first heat-source heat exchanger 1A faces the second heat-source heat exchanger 1B in the lateral direction of the machine chamber 4. The third heat-source heat exchanger 1C faces the fourth heat-source heat exchanger 1D in the lateral direction of the machine chamber 4. The first heat-source heat exchanger 1A and the third heat-source heat exchanger 1C are arranged side by side in the longitudinal direction of the machine chamber 4. The second heat-source heat exchanger 1B and the fourth heat-source heat exchanger 1 D are arranged side by side in the longitudinal direction of the machine chamber 4.

Furthermore, a short side portion 1AS of the first heat-source heat exchanger 1A faces a short side portion 1BS of the second heat-source heat exchanger 1B in the longitudinal direction of the machine chamber 4. A short side portion 1CS of the third heat-source heat exchanger 1C faces a short side portion 1DS of the fourth heat-source heat exchanger 1D in the longitudinal direction of the machine chamber 4. In addition, a long side portion 1AL of the first heat-source heat exchanger 1A and a long side portion 1CL of the third heat-source heat exchanger 1C are arranged side by side in the longitudinal direction of the machine chamber 4. A long side portion 1BL of the second heat-source heat exchanger 1B and a long side portion 1DL of the fourth heat-source heat exchanger 1D are arranged side by side in the longitudinal direction of the machine chamber 4. The first heat-source heat exchanger 1A and the second heat-source heat exchanger 1B arranged in the above-described manner form a rectangle. An edge 1AE, along which the short side portion 1AS and the long side portion 1AL meet, of the first heat-source heat exchanger 1A is located at one corner of the rectangle. An edge 1BE, along which the short side portion 1BS and the long side portion 1BL meet, of the second heat-source heat exchanger 1B is located at one corner of the rectangle. Furthermore, the third heat-source heat exchanger 1C and the fourth heat-source heat exchanger 1D form a rectangle. An edge 1CE, along which the short side portion 1CS and the long side portion 1CL meet, of the third heat-source heat exchanger 1C is located at one corner of the rectangle. An edge 1DE, along which the short side portion 1DS and the long side portion 1DL meet, of the fourth heat-source heat exchanger 1D is located at one corner of the rectangle. The arrangement of the heat-source heat exchangers in Fig. 4 is merely an example. The heat-source heat exchangers may be arranged in a different manner.

In the chilling unit 100 according to Embodiment 1, incoming air flows in a direction orthogonal to long sides of the aluminum flat tubes of the first heat-source heat exchanger 1A, the second heat-source heat exchanger 1B, the third heat-source heat exchanger 1C, and the fourth heat-source heat exchanger 1D. Therefore, the incoming air is guided to spaces between the facing flat portions of the aluminum flat tubes, and flows in a direction along the width of the aluminum flat tubes, or orthogonally to the longitudinal direction of the aluminum flat tubes.

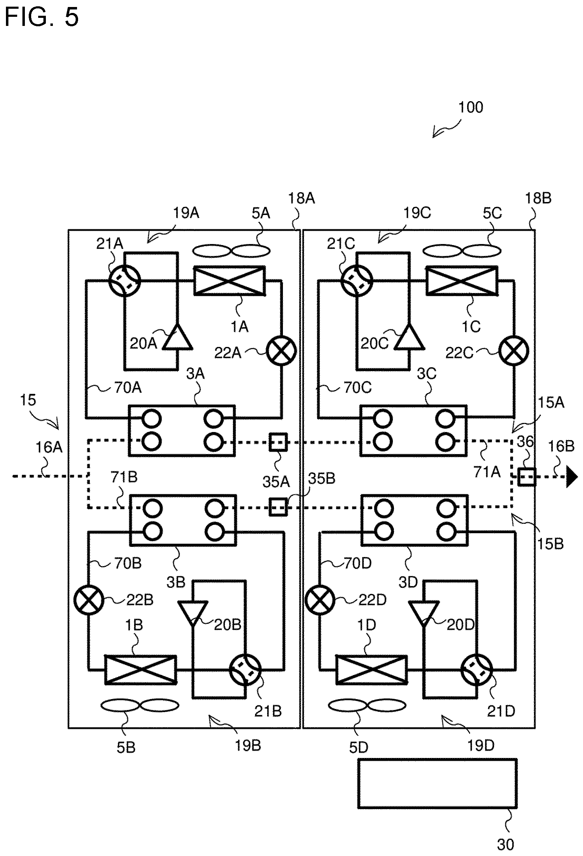

Fig. 5 is a circuit diagram illustrating the chilling unit 100 according to Embodiment 1. As illustrated in Fig. 5, the chilling unit 100 includes an upstream system circuit 18A, a downstream system circuit 18B, a heat medium circuit 15, a first intermediate temperature detecting unit 35A, a second intermediate temperature detecting unit 35B, an outlet temperature detecting unit 36, and the controller 30.

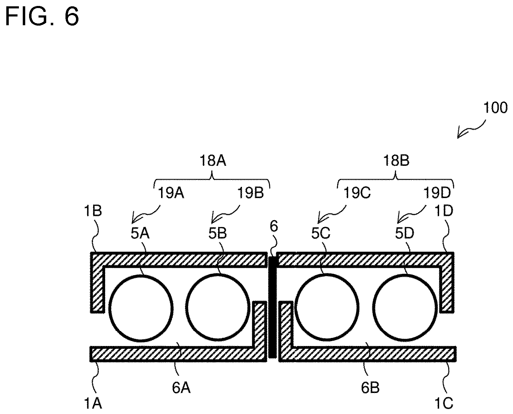

Fig. 6 is a top plan view of the chilling unit 100 according to Embodiment 1. As illustrated in Fig. 6, the chilling unit 100 includes the upstream system circuit 18A, the downstream system circuit 18B, and a separator 6. The separator 6 divides a space surrounded by the first heat-source heat exchanger 1A, the second heat-source heat exchanger 1B, the third heat-source heat exchanger 1C, and the fourth heat-source heat exchanger 1D into a first chamber 6A containing the upstream system circuit 18A and a second chamber 6B containing the downstream system circuit 18B. Such a configuration allows the upstream system circuit 18A and the downstream system circuit 18B to implement different operation modes. In the upstream system circuit 18A, the first refrigerant circuit 19A and a second refrigerant circuit 19B implement the same operation mode. In the downstream system circuit 18B, a third refrigerant circuit 19C and a fourth refrigerant circuit 19D implement the same operation mode. The arrangement of the heat-source heat exchangers in Fig. 6 is merely an example. The heat-source heat exchangers may be arranged in a different manner.

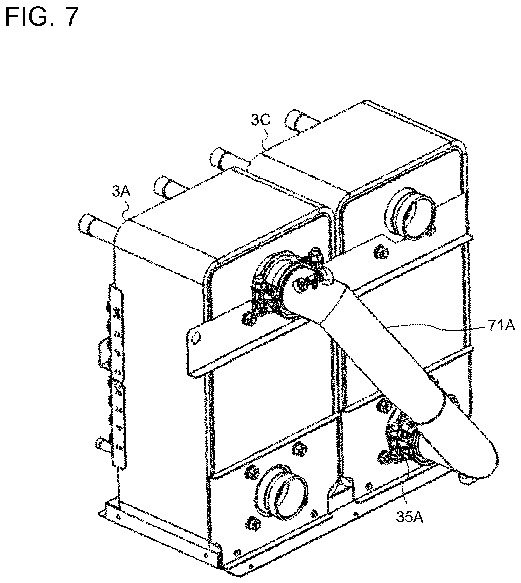

Fig. 7 is a rear perspective view illustrating the first refrigerant-to-heat medium heat exchanger 3A and a third refrigerant-to-heat medium heat exchanger 3C in Embodiment 1. As illustrated in Fig. 7, the first refrigerant-to-heat medium heat exchanger 3A and the third refrigerant-to-heat medium heat exchanger 3C are next to each other and are in close contact with each other. This arrangement is achieved for the following reason. The first refrigerant circuit 19A and the second refrigerant circuit 19B in the upstream system circuit 18A implement the same operation mode. This eliminates the need for an entrance length required to stabilize a temperature in a cooling and heating mixed operation. The elimination of the need for the entrance length reduces the length of a first branch pipe 71A included in a first branch circuit 15A in the heat medium circuit 15. This enables close contact between the first refrigerant-to-heat medium heat exchanger 3A and the third refrigerant-to-heat medium heat exchanger 3C.

### (Upstream System Circuit 18A)

The upstream system circuit 18A, which includes a refrigerant circuit located in an upstream portion of the heat medium circuit 15 through which heat medium flows as illustrated in Fig. 5, includes the first refrigerant circuit 19A and the second refrigerant circuit 19B.

### (First Refrigerant Circuit 19A)

The first refrigerant circuit 19A is formed by connecting the first compressor 20A, a first flow switching device 21A, the first heat-source heat exchanger 1A, a first expansion unit 22A, and the first refrigerant-to-heat medium heat exchanger 3A with a first refrigerant pipe 70A. The first compressor 20A sucks low-temperature, low-pressure refrigerant, compresses the sucked refrigerant into high-temperature, high-pressure refrigerant, and discharges the refrigerant. The first flow switching device 21A switches between refrigerant flow directions in the first refrigerant circuit 19A. The first flow switching device 21A is, for example, a four-way valve. The first heat-source heat exchanger 1A is an air heat exchanger that exchanges heat between refrigerant and, for example, outdoor air. The first heat-source heat exchanger 1A operates as a condenser in a cooling operation and operates as an evaporator in a heating operation. The first fan 5A is a device that sends the outdoor air to the first heat-source heat exchanger 1A. The first expansion unit 22A is a pressure reducing valve or expansion valve that reduces the pressure of refrigerant to expand the refrigerant. The first expansion unit 22A is, for example, an electronic expansion valve whose opening degree is adjustable. The first refrigerant-to-heat medium heat exchanger 3A exchanges heat between the heat medium flowing through the heat medium circuit 15 and the refrigerant. The first refrigerant-to-heat medium heat exchanger 3A operates as an evaporator in the cooling operation and operates as a condenser in the heating operation.

### (Second Refrigerant Circuit 19B)

The second refrigerant circuit 19B is formed by connecting a second compressor 20B, a second flow switching device 21B, the second heat-source heat exchanger 1B, a second expansion unit 22B, and a second refrigerant-to-heat medium heat exchanger 3B with a second refrigerant pipe 70B. The second compressor 20B sucks low-temperature, low-pressure refrigerant, compresses the sucked refrigerant into high-temperature, high-pressure refrigerant, and discharges the refrigerant. The second flow switching device 21B switches between the refrigerant flow directions in the second refrigerant circuit 19B. The second flow switching device 21B is, for example, a four-way valve. The second heat-source heat exchanger 1B is an air heat exchanger that exchanges heat between refrigerant and, for example, outdoor air. The second heat-source heat exchanger 1B operates as a condenser in the cooling operation and operates as an evaporator in the heating operation. The second fan 5B is a device that sends the outdoor air to the second heat-source heat exchanger 1B. The second expansion unit 22B is a pressure reducing valve or expansion valve that reduces the pressure of refrigerant to expand the refrigerant. The second expansion unit 22B is, for example, an electronic expansion valve whose opening degree is adjustable. The second refrigerant-to-heat medium heat exchanger 3B exchanges heat between the heat medium flowing through the heat medium circuit 15 and the refrigerant. The second refrigerant-to-heat medium heat exchanger 3B operates as an evaporator in the cooling operation and operates as a condenser in the heating operation.

### (Downstream System Circuit 18B)

The downstream system circuit 18B, which includes a refrigerant circuit located in a downstream portion of the heat medium circuit 15 through which the heat medium flows, includes the third refrigerant circuit 19C and the fourth refrigerant circuit 19D.

### (Third Refrigerant Circuit 19C)

The third refrigerant circuit 19C is formed by connecting a third compressor 20C, a third flow switching device 21C, the third heat-source heat exchanger 1C, a third expansion unit 22C, and the third refrigerant-to-heat medium heat exchanger 3C with a third refrigerant pipe 70C. The third compressor 20C sucks low-temperature, low-pressure refrigerant, compresses the sucked refrigerant into high-temperature, high-pressure refrigerant, and discharges the refrigerant. The third flow switching device 21C switches between the refrigerant flow directions in the third refrigerant circuit 19C. The third flow switching device 21C is, for example, a four-way valve. The third heat-source heat exchanger 1C is an air heat exchanger that exchanges heat between refrigerant and, for example, outdoor air. The third heat-source heat exchanger 1C operates as a condenser in the cooling operation and operates as an evaporator in the heating operation. The third fan 5C is a device that sends the outdoor air to the third heat-source heat exchanger 1C. The third expansion unit 22C is a pressure reducing valve or expansion valve that reduces the pressure of refrigerant to expand the refrigerant. The third expansion unit 22C is, for example, an electronic expansion valve whose opening degree is adjustable. The third refrigerant-to-heat medium heat exchanger 3C exchanges heat between the heat medium flowing through the heat medium circuit 15 and the refrigerant. The third refrigerant-to-heat medium heat exchanger 3C operates as an evaporator in the cooling operation and operates as a condenser in the heating operation.

### (Fourth Refrigerant Circuit 19D)

The fourth refrigerant circuit 19D is formed by connecting a fourth compressor 20D, a fourth flow switching device 21D, the fourth heat-source heat exchanger 1D, a fourth expansion unit 22D, and a fourth refrigerant-to-heat medium heat exchanger 3D with a fourth refrigerant pipe 70D. The fourth compressor 20D sucks low-temperature, low-pressure refrigerant, compresses the sucked refrigerant into high-temperature, high-pressure refrigerant, and discharges the refrigerant. The fourth flow switching device 21D switches between the refrigerant flow directions in the fourth refrigerant circuit 19D. The fourth flow switching device 21D is, for example, a four-way valve. The fourth heat-source heat exchanger 1D is an air heat exchanger that exchanges heat between refrigerant and, for example, outdoor air. The fourth heat-source heat exchanger 1D operates as a condenser in the cooling operation and operates as an evaporator in the heating operation. The fourth fan 5D is a device that sends the outdoor air to the fourth heat-source heat exchanger 1D. The fourth expansion unit 22D is a pressure reducing valve or expansion valve that reduces the pressure of refrigerant to expand the refrigerant. The fourth expansion unit 22D is, for example, an electronic expansion valve whose opening degree is adjustable. The fourth refrigerant-to-heat medium heat exchanger 3D exchanges heat between the heat medium flowing through the heat medium circuit 15 and the refrigerant. The fourth refrigerant-to-heat medium heat exchanger 3D operates as an evaporator in the cooling operation and operates as a condenser in the heating operation.

### (Heat Medium Circuit 15)

The heat medium circuit 15 includes an inlet circuit 16A, an outlet circuit 16B, the first branch circuit 15A, and a second branch circuit 15B.

### (Inlet Circuit 16A)

The inlet circuit 16A is a circuit through which the heat medium flows before being divided into streams to enter the first branch circuit 15A and the second branch circuit 15B.

### (Outlet Circuit 16B)

The outlet circuit 16B is a circuit in which the heat medium leaving the first branch circuit 15A and the heat medium leaving the second branch circuit 15B join together.

### (First Branch Circuit 15A)

The first branch circuit 15A is a circuit in which the first refrigerant-to-heat medium heat exchanger 3A and the third refrigerant-to-heat medium heat exchanger 3C are connected in series by the first branch pipe 71A and through which the heat medium flows in a direction from the first refrigerant-to-heat medium heat exchanger 3A to the third refrigerant-to-heat medium heat exchanger 3C.

### (Second Branch Circuit 15B)

The second branch circuit 15B is a circuit in which the second refrigerant-to-heat medium heat exchanger 3B and the fourth refrigerant-to-heat medium heat exchanger 3D are connected in series by a second branch pipe 71B and through which the heat medium flows in a direction from the second refrigerant-to-heat medium heat exchanger 3B to the fourth refrigerant-to-heat medium heat exchanger 3D.

### (First Intermediate Temperature Detecting Unit 35A)

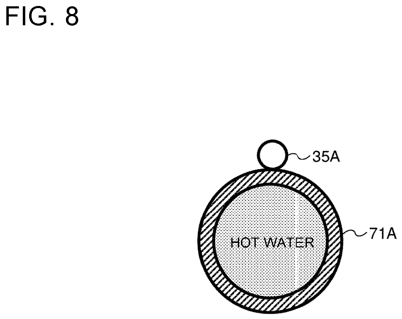

Fig. 8 is a schematic diagram illustrating the first intermediate temperature detecting unit 35A in Embodiment 1. As illustrated in Fig. 8, the first intermediate temperature detecting unit 35A is mounted at a mounting portion (not illustrated) of the first branch pipe 71A. The length of the mounting portion is short. As illustrated in Fig. 7, the first intermediate temperature detecting unit 35A is mounted at a portion of the first branch pipe 71A that is connected to the third refrigerant-to-heat medium heat exchanger 3C. The first intermediate temperature detecting unit 35A is positioned within a distance of 420 mm from an outlet of the first refrigerant-to-heat medium heat exchanger 3A. In Embodiment 1, the elimination of the need for the entrance length required to stabilize a temperature in the cooling and heating mixed operation enables the first intermediate temperature detecting unit 35A to be directly mounted to an outer circumferential surface of the first branch pipe 71A. If the entrance length was needed, the temperature detecting unit would need to be inserted into the pipe. This would lead to an increase in mounting cost as well as an increase in length of the mounting portion of the pipe. In Embodiment 1, the first intermediate temperature detecting unit 35A can be directly mounted to the outer circumferential surface of the first branch pipe 71A. This leads to a reduction in length of the mounting portion of the pipe and a reduction in mounting cost.

### (Second Intermediate Temperature Detecting Unit 35B)

The second intermediate temperature detecting unit 35B is disposed between the second refrigerant-to-heat medium heat exchanger 3B and the fourth refrigerant-to-heat medium heat exchanger 3D in the second branch circuit 15B. The second intermediate temperature detecting unit 35B measures the temperature of the heat medium flowing between the second refrigerant-to-heat medium heat exchanger 3B and the fourth refrigerant-to-heat medium heat exchanger 3D. The second intermediate temperature detecting unit 35B has the same configuration as that of the first intermediate temperature detecting unit 35A.

### (Outlet Temperature Detecting Unit 36)

The outlet temperature detecting unit 36 is disposed in the outlet circuit 16B. Specifically, the outlet temperature detecting unit 36 is disposed downstream of the third refrigerant-to-heat medium heat exchanger 3C and the fourth refrigerant-to-heat medium heat exchanger 3D in the heat medium circuit 15. The outlet temperature detecting unit 36 measures the temperature of the heat medium flowing through the outlet circuit 16B.

### (Operation Mode, Cooling Operation)

Operation modes of an air-conditioning system 200 will now be described. The operation modes of the air-conditioning system 200 in Embodiment 1 include a cooling operation mode, a heating operation mode, an upstream-defrosting and heating mixed operation mode, and a downstream-defrosting and heating mixed operation mode. First, the cooling operation will be described. In the cooling operation, the refrigerant flows in the same direction in the first refrigerant circuit 19A, the second refrigerant circuit 19B, the third refrigerant circuit 19C, and the fourth refrigerant circuit 19D.

The flow of the refrigerant in the first refrigerant circuit 19A will be described. In the cooling operation, the refrigerant sucked into the first compressor 20A is compressed into high-temperature, high-pressure gas refrigerant by the first compressor 20A and is then discharged therefrom. The high-temperature, high-pressure gas refrigerant discharged from the first compressor 20A passes through the first flow switching device 21A and enters the first heat-source heat exchanger 1A operating as a condenser. In the first heat-source heat exchanger 1A, the refrigerant exchanges heat with the outdoor air sent by the first fan 5A and thus condenses into liquid. The condensed liquid refrigerant then enters the first expansion unit 22A. The refrigerant is expanded and reduced in pressure into low-temperature, low-pressure, two-phase gas-liquid refrigerant by the first expansion unit 22A. Then, the two-phase gas-liquid refrigerant enters the first refrigerant-to-heat medium heat exchanger 3A operating as an evaporator. In the first refrigerant-to-heat medium heat exchanger 3A, the refrigerant exchanges heat with the heat medium flowing through the first branch circuit 15A and thus evaporates into gas. At this time, the heat medium is cooled. The evaporated, low-temperature, low-pressure gas refrigerant passes through the first flow switching device 21A and is then sucked into the first compressor 20A.

The flow of the refrigerant in the second refrigerant circuit 19B will be described. In the cooling operation, the refrigerant sucked into the second compressor 20B is compressed into high-temperature, high-pressure gas refrigerant by the second compressor 20B and is then discharged therefrom. The high-temperature, high-pressure gas refrigerant discharged from the second compressor 20B passes through the second flow switching device 21B and enters the second heat-source heat exchanger 1B operating as a condenser. In the second heat-source heat exchanger 1B, the refrigerant exchanges heat with the outdoor air sent by the second fan 5B and thus condenses into liquid. The condensed liquid refrigerant then enters the second expansion unit 22B. The refrigerant is expanded and reduced in pressure into low-temperature, low-pressure, two-phase gas-liquid refrigerant by the second expansion unit 22B. Then, the two-phase gas-liquid refrigerant enters the second refrigerant-to-heat medium heat exchanger 3B operating as an evaporator. In the second refrigerant-to-heat medium heat exchanger 3B, the refrigerant exchanges heat with the heat medium flowing through the second branch circuit 15B and thus evaporates into gas. At this time, the heat medium is cooled. The evaporated, low-temperature, low-pressure gas refrigerant passes through the second flow switching device 21B and is then sucked into the second compressor 20B.

The flow of the refrigerant in the third refrigerant circuit 19C will be described. In the cooling operation, the refrigerant sucked into the third compressor 20C is compressed into high-temperature, high-pressure gas refrigerant by the third compressor 20C and is then discharged therefrom. The high-temperature, high-pressure gas refrigerant discharged from the third compressor 20C passes through the third flow switching device 21C and enters the third heat-source heat exchanger 1C operating as a condenser. In the third heat-source heat exchanger 1C, the refrigerant exchanges heat with the outdoor air sent by the third fan 5C and thus condenses into liquid. The condensed liquid refrigerant then enters the third expansion unit 22C. The refrigerant is expanded and reduced in pressure into low-temperature, low-pressure, two-phase gas-liquid refrigerant by the third expansion unit 22C. Then, the two-phase gas-liquid refrigerant enters the third refrigerant-to-heat medium heat exchanger 3C operating as an evaporator. In the third refrigerant-to-heat medium heat exchanger 3C, the refrigerant exchanges heat with the heat medium flowing through the first branch circuit 15A and thus evaporates into gas. At this time, the heat medium is cooled. The evaporated, low-temperature, low-pressure gas refrigerant passes through the third flow switching device 21C and is then sucked into the third compressor 20C.

The flow of the refrigerant in the fourth refrigerant circuit 19D will be described. In the cooling operation, the refrigerant sucked into the fourth compressor 20D is compressed into high-temperature, high-pressure gas refrigerant by the fourth compressor 20D and is then discharged therefrom. The high-temperature, high-pressure gas refrigerant discharged from the fourth compressor 20D passes through the fourth flow switching device 21D and enters the fourth heat-source heat exchanger 1D operating as a condenser. In the fourth heat-source heat exchanger 1D, the refrigerant exchanges heat with the outdoor air sent by the fourth fan 5D and thus condenses into liquid. The condensed liquid refrigerant then enters the fourth expansion unit 22D. The refrigerant is expanded and reduced in pressure into low-temperature, low-pressure, two-phase gas-liquid refrigerant by the fourth expansion unit 22D. Then, the two-phase gas-liquid refrigerant enters the fourth refrigerant-to-heat medium heat exchanger 3D operating as an evaporator. In the fourth refrigerant-to-heat medium heat exchanger 3D, the refrigerant exchanges heat with the heat medium flowing through the second branch circuit 15B and thus evaporates into gas. At this time, the heat medium is cooled. The evaporated, low-temperature, low-pressure gas refrigerant passes through the fourth flow switching device 21D and is then sucked into the fourth compressor 20D.

The flow of the heat medium in the heat medium circuit 15 will now be described. The heat medium flowing through the inlet circuit 16A is divided into two streams, which flow into the first branch circuit 15A and the second branch circuit 15B. Once in the first branch circuit 15A, the heat medium exchanges heat with the refrigerant flowing through the first refrigerant circuit 19A in the first refrigerant-to-heat medium heat exchanger 3A, so that the heat medium is cooled. The cooled heat medium further exchanges heat with the refrigerant flowing through the third refrigerant circuit 19C in the third refrigerant-to-heat medium heat exchanger 3C, so that the heat medium is cooled. After that, the cooled heat medium enters the outlet circuit 16B. Once in the second branch circuit 15B, the heat medium exchanges heat with the refrigerant flowing through the second refrigerant circuit 19B in the second refrigerant-to-heat medium heat exchanger 3B, so that the heat medium is cooled. The cooled heat medium further exchanges heat with the refrigerant flowing through the fourth refrigerant circuit 19D in the fourth refrigerant-heat medium heat exchanger 3D, so that the heat medium is cooled. After that, the cooled heat medium enters the outlet circuit 16B. The heat medium leaving the first branch circuit 15A and the heat medium leaving the second branch circuit 15B join together in the outlet circuit 16B. The low-temperature heat medium flowing through the outlet circuit 16B is sent and supplied to the use-side unit. Thus, an air-conditioning target space is cooled.

### (Operation Mode, Heating Operation)

The heating operation will now be described. In the heating operation, the refrigerant flows in the same direction in the first refrigerant circuit 19A, the second refrigerant circuit 19B, the third refrigerant circuit 19C, and the fourth refrigerant circuit 19D. The flow of the refrigerant in the first refrigerant circuit 19A will be described. In the heating operation, the refrigerant sucked into the first compressor 20A is compressed into high-temperature, high-pressure gas refrigerant by the first compressor 20A and is then discharged therefrom. The high-temperature, high-pressure gas refrigerant discharged from the first compressor 20A passes through the first flow switching device 21A and enters the first refrigerant-to-heat medium heat exchanger 3A operating as a condenser. In the first refrigerant-to-heat medium heat exchanger 3A, the refrigerant exchanges heat with the heat medium flowing through the first branch circuit 15A and thus condenses into liquid. At this time, the heat medium is heated. The condensed liquid refrigerant then enters the first expansion unit 22A. The refrigerant is expanded and reduced in pressure into low-temperature, low-pressure, two-phase gas-liquid refrigerant by the first expansion unit 22A. Then, the two-phase gas-liquid refrigerant enters the first heat-source heat exchanger 1A operating as an evaporator. In the first heat-source heat exchanger 1A, the refrigerant exchanges heat with the outdoor air sent by the first fan 5A and thus evaporates into gas. The evaporated, low-temperature, low-pressure gas refrigerant passes through the first flow switching device 21A and is then sucked into the first compressor 20A.

The flow of the refrigerant in the second refrigerant circuit 19B will be described. In the heating operation, the refrigerant sucked into the second compressor 20B is compressed into high-temperature, high-pressure gas refrigerant by the second compressor 20B and is then discharged therefrom. The high-temperature, high-pressure gas refrigerant discharged from the second compressor 20B passes through the second flow switching device 21B and enters the second refrigerant-to-heat medium heat exchanger 3B operating as a condenser. In the second refrigerant-to-heat medium heat exchanger 3B, the refrigerant exchanges heat with the heat medium flowing through the second branch circuit 15B and thus condenses into liquid. At this time, the heat medium is heated. The condensed liquid refrigerant then enters the second expansion unit 22B. The refrigerant is expanded and reduced in pressure into low-temperature, low-pressure, two-phase gas-liquid refrigerant by the second expansion unit 22B. Then, the two-phase gas-liquid refrigerant enters the second heat-source heat exchanger 1B operating as an evaporator. In the second heat-source heat exchanger 1B, the refrigerant exchanges heat with the outdoor air sent by the second fan 5B and thus evaporates into gas. The evaporated, low-temperature, low-pressure gas refrigerant passes through the second flow switching device 21B and is then sucked into the second compressor 20B.

The flow of the refrigerant in the third refrigerant circuit 19C will be described. In the heating operation, the refrigerant sucked into the third compressor 20C is compressed into high-temperature, high-pressure gas refrigerant by the third compressor 20C and is then discharged therefrom. The high-temperature, high-pressure gas refrigerant discharged from the third compressor 20C passes through the third flow switching device 21C and enters the third refrigerant-to-heat medium heat exchanger 3C operating as a condenser. In the third refrigerant-to-heat medium heat exchanger 3C, the refrigerant exchanges heat with the heat medium flowing through the first branch circuit 15A and thus condenses into liquid. At this time, the heat medium is heated. The condensed liquid refrigerant then enters the third expansion unit 22C. The refrigerant is expanded and reduced in pressure into low-temperature, low-pressure, two-phase gas-liquid refrigerant by the third expansion unit 22C. Then, the two-phase gas-liquid refrigerant enters the third heat-source heat exchanger 1C operating as an evaporator. In the third heat-source heat exchanger 1C, the refrigerant exchanges heat with the outdoor air sent by the third fan 5C and thus evaporates into gas. The evaporated, low-temperature, low-pressure gas refrigerant passes through the third flow switching device 21C and is then sucked into the third compressor 20C.

The flow of the refrigerant in the fourth refrigerant circuit 19D will be described. In the heating operation, the refrigerant sucked into the fourth compressor 20D is compressed into high-temperature, high-pressure gas refrigerant by the fourth compressor 20D and is then discharged therefrom. The high-temperature, high-pressure gas refrigerant discharged from the fourth compressor 20D passes through the fourth flow switching device 21D and enters the fourth refrigerant-to-heat medium heat exchanger 3D operating as a condenser. In the fourth refrigerant-to-heat medium heat exchanger 3D, the refrigerant exchanges heat with the heat medium flowing through the second branch circuit 15B and thus condenses into liquid. At this time, the heat medium is heated. The condensed liquid refrigerant then enters the fourth expansion unit 22D. The refrigerant is expanded and reduced in pressure into low-temperature, low-pressure, two-phase gas-liquid refrigerant by the fourth expansion unit 22D. Then, the two-phase gas-liquid refrigerant enters the fourth heat-source heat exchanger 1D operating as an evaporator. In the fourth heat-source heat exchanger 1D, the refrigerant exchanges heat with the outdoor air sent by the fourth fan 5D and thus evaporates into gas. The evaporated, low-temperature, low-pressure gas refrigerant passes through the fourth flow switching device 21D and is then sucked into the fourth compressor 20D.

The flow of the heat medium in the heat medium circuit 15 will now be described. The heat medium flowing through the inlet circuit 16A is divided into two streams, which flow into the first branch circuit 15A and the second branch circuit 15B. Once in the first branch circuit 15A, the heat medium exchanges heat with the refrigerant flowing through the first refrigerant circuit 19A in the first refrigerant-to-heat medium heat exchanger 3A, so that the heat medium is heated. The heated heat medium further exchanges heat with the refrigerant flowing through the third refrigerant circuit 19C in the third refrigerant-to-heat medium heat exchanger 3C, so that the heat medium is heated. After that, the heated heat medium enters the outlet circuit 16B. Once in the second branch circuit 15B, the heat medium exchanges heat with the refrigerant flowing through the second refrigerant circuit 19B in the second refrigerant-to-heat medium heat exchanger 3B, so that the heat medium is heated. The heated heat medium further exchanges heat with the refrigerant flowing through the fourth refrigerant circuit 19D in the fourth refrigerant-to-heat medium heat exchanger 3D, so that the heat medium is heated. After that, the heated heat medium enters the outlet circuit 16B. The heat medium leaving the first branch circuit 15A and the heat medium leaving the second branch circuit 15B join together in the outlet circuit 16B. The high-temperature heat medium flowing through the outlet circuit 16B is sent and supplied to the use-side unit. Thus, the air-conditioning target space is heated.

### (Operation Mode, Upstream-Defrosting and Heating Mixed Operation Mode)

An upstream-defrosting and heating mixed operation will now be described. In the upstream-defrosting and heating mixed operation, the flow of the refrigerant in the first refrigerant circuit 19A and the second refrigerant circuit 19B is the same as that in the cooling operation, and the flow of the refrigerant in the third refrigerant circuit 19C and the fourth refrigerant circuit 19D is the same as that in the heating operation. In Embodiment 1, for example, it is assumed that the defrosting operation is performed by switching a passage. The defrosting operation may be performed by causing hot gas to flow through a bypass.

The flow of the refrigerant in the first refrigerant circuit 19A will be described. In the upstream-defrosting and heating mixed operation, the refrigerant sucked into the first compressor 20A is compressed into high-temperature, high-pressure gas refrigerant by the first compressor 20A and is then discharged therefrom. The high-temperature, high-pressure gas refrigerant discharged from the first compressor 20A passes through the first flow switching device 21A, enters the first heat-source heat exchanger 1A operating as a condenser, and defrosts the first heat-source heat exchanger 1A. The refrigerant leaving the first heat-source heat exchanger 1A enters the first expansion unit 22A. The refrigerant is expanded and reduced in pressure into low-temperature, low-pressure, two-phase gas-liquid refrigerant by the first expansion unit 22A. Then, the two-phase gas-liquid refrigerant enters the first refrigerant-to-heat medium heat exchanger 3A. In the first refrigerant-to-heat medium heat exchanger 3A, the refrigerant exchanges heat with the heat medium flowing through the first branch circuit 15A and thus evaporates into gas. The evaporated, low-temperature, low-pressure gas refrigerant passes through the first flow switching device 21A and is then sucked into the first compressor 20A.

The flow of the refrigerant in the second refrigerant circuit 19B will be described. In the upstream-defrosting and heating mixed operation, the refrigerant sucked into the second compressor 20B is compressed into high-temperature, high-pressure gas refrigerant by the second compressor 20B and is then discharged therefrom. The high-temperature, high-pressure gas refrigerant discharged from the second compressor 20B passes through the second flow switching device 21B, enters the second heat-source heat exchanger 1B operating as a condenser, and defrosts the second heat-source heat exchanger 1B. The refrigerant leaving the second heat-source heat exchanger 1B enters the second expansion unit 22B. The refrigerant is expanded and reduced in pressure into low-temperature, low-pressure, two-phase gas-liquid refrigerant by the second expansion unit 22B. Then, the two-phase gas-liquid refrigerant enters the second refrigerant-to-heat medium heat exchanger 3B. In the second refrigerant-to-heat medium heat exchanger 3B, the refrigerant exchanges heat with the heat medium flowing through the second branch circuit 15B and thus evaporates into gas. The evaporated, low-temperature, low-pressure gas refrigerant passes through the second flow switching device 21B and is then sucked into the second compressor 20B.

The flow of the refrigerant in the third refrigerant circuit 19C will be described. In the upstream-defrosting and heating mixed operation, the refrigerant sucked into the third compressor 20C is compressed into high-temperature, high-pressure gas refrigerant by the third compressor 20C and is then discharged therefrom. The high-temperature, high-pressure gas refrigerant discharged from the third compressor 20C passes through the third flow switching device 21C and enters the third refrigerant-to-heat medium heat exchanger 3C operating as a condenser. In the third refrigerant-to-heat medium heat exchanger 3C, the refrigerant exchanges heat with the heat medium flowing through the first branch circuit 15A and thus condenses into liquid. At this time, the heat medium is heated. The condensed liquid refrigerant then enters the third expansion unit 22C. The refrigerant is expanded and reduced in pressure into low-temperature, low-pressure, two-phase gas-liquid refrigerant by the third expansion unit 22C. Then, the two-phase gas-liquid refrigerant enters the third heat-source heat exchanger 1C operating as an evaporator. In the third heat-source heat exchanger 1C, the refrigerant exchanges heat with the outdoor air sent by the third fan 5C and thus evaporates into gas. The evaporated, low-temperature, low-pressure gas refrigerant passes through the third flow switching device 21C and is then sucked into the third compressor 20C.

The flow of the refrigerant in the fourth refrigerant circuit 19D will be described. In the upstream-defrosting and heating mixed operation, the refrigerant sucked into the fourth compressor 20D is compressed into high-temperature, high-pressure gas refrigerant by the fourth compressor 20D and is then discharged therefrom. The high-temperature, high-pressure gas refrigerant discharged from the fourth compressor 20D passes through the fourth flow switching device 21D and enters the fourth refrigerant-to-heat medium heat exchanger 3D operating as a condenser. In the fourth refrigerant-to-heat medium heat exchanger 3D, the refrigerant exchanges heat with the heat medium flowing through the second branch circuit 15B and thus condenses into liquid. At this time, the heat medium is heated. The condensed liquid refrigerant then enters the fourth expansion unit 22D. The refrigerant is expanded and reduced in pressure into low-temperature, low-pressure, two-phase gas-liquid refrigerant by the fourth expansion unit 22D. Then, the two-phase gas-liquid refrigerant enters the fourth heat-source heat exchanger 1D operating as an evaporator. In the fourth heat-source heat exchanger 1D, the refrigerant exchanges heat with the outdoor air sent by the fourth fan 5D and thus evaporates into gas. The evaporated, low-temperature, low-pressure gas refrigerant passes through the fourth flow switching device 21D and is then sucked into the fourth compressor 20D.

The flow of the heat medium in the heat medium circuit 15 will now be described. The heat medium flowing through the inlet circuit 16A is divided into two streams, which flow into the first branch circuit 15A and the second branch circuit 15B. Once in the first branch circuit 15A, the heat medium exchanges heat with the refrigerant flowing through the first refrigerant circuit 19A in the first refrigerant-to-heat medium heat exchanger 3A, so that the heat medium is slightly cooled. The cooled heat medium further exchanges heat with the refrigerant flowing through the third refrigerant circuit 19C in the third refrigerant-to-heat medium heat exchanger 3C, so that the heat medium is heated. After that, the heated heat medium enters the outlet circuit 16B. Once in the second branch circuit 15B, the heat medium exchanges heat with the refrigerant flowing through the second refrigerant circuit 19B in the second refrigerant-to-heat medium heat exchanger 3B, so that the heat medium is slightly cooled. The cooled heat medium further exchanges heat with the refrigerant flowing through the fourth refrigerant circuit 19D in the fourth refrigerant-to-heat medium heat exchanger 3D, so that the heat medium is heated. After that, the heated heat medium enters the outlet circuit 16B. The heat medium leaving the first branch circuit 15A and the heat medium leaving the second branch circuit 15B join together in the outlet circuit 16B. The high-temperature heat medium flowing through the outlet circuit 16B is sent and supplied to the use-side unit. Thus, heating is performed. As described above, in the upstream-defrosting and heating mixed operation mode, a defrosting operation is performed in the upstream system circuit 18A and the heating operation is performed in the downstream system circuit 18B, so that heating is continued while defrosting is being performed.

### (Operation Mode, Downstream-Defrosting and Heating Mixed Operation Mode)

A downstream-defrosting and heating mixed operation will now be described. In the downstream-defrosting and heating mixed operation, the flow of the refrigerant in the first refrigerant circuit 19A and the second refrigerant circuit 19B is the same as that in the heating operation, and the flow of the refrigerant in the third refrigerant circuit 19C and the fourth refrigerant circuit 19D is the same as that in the cooling operation.

The flow of the refrigerant in the first refrigerant circuit 19A will be described. In the downstream-defrosting and heating mixed operation, the refrigerant sucked into the first compressor 20A is compressed into high-temperature, high-pressure gas refrigerant by the first compressor 20A and is then discharged therefrom. The high-temperature, high-pressure gas refrigerant discharged from the first compressor 20A passes through the first flow switching device 21A and enters the first refrigerant-to-heat medium heat exchanger 3A operating as a condenser. In the first refrigerant-to-heat medium heat exchanger 3A, the refrigerant exchanges heat with the heat medium flowing through the first branch circuit 15A and thus condenses into liquid. At this time, the heat medium is heated. The condensed liquid refrigerant then enters the first expansion unit 22A. The refrigerant is expanded and reduced in pressure into low-temperature, low-pressure, two-phase gas-liquid refrigerant by the first expansion unit 22A. Then, the two-phase gas-liquid refrigerant enters the first heat-source heat exchanger 1A operating as an evaporator. In the first heat-source heat exchanger 1A, the refrigerant exchanges heat with the outdoor air sent by the first fan 5A and thus evaporates into gas. The evaporated, low-temperature, low-pressure gas refrigerant passes through the first flow switching device 21A and is then sucked into the first compressor 20A.

The flow of the refrigerant in the second refrigerant circuit 19B will be described. In the downstream-defrosting and heating mixed operation, the refrigerant sucked into the second compressor 20B is compressed into high-temperature, high-pressure gas refrigerant by the second compressor 20B and is then discharged therefrom. The high-temperature, high-pressure gas refrigerant discharged from the second compressor 20B passes through the second flow switching device 21B and enters the second refrigerant-to-heat medium heat exchanger 3B operating as a condenser. In the second refrigerant-to-heat medium heat exchanger 3B, the refrigerant exchanges heat with the heat medium flowing through the second branch circuit 15B and thus condenses into liquid. At this time, the heat medium is heated. The condensed liquid refrigerant then enters the second expansion unit 22B. The refrigerant is expanded and reduced in pressure into low-temperature, low-pressure two-phase gas-liquid refrigerant by the second expansion unit 22B. Then, the two-phase gas-liquid refrigerant enters the second heat-source heat exchanger 1B operating as an evaporator. In the second heat-source heat exchanger 1B, the refrigerant exchanges heat with the outdoor air sent by the second fan 5B and thus evaporates into gas. The evaporated, low-temperature, low-pressure gas refrigerant passes through the second flow switching device 21B and is then sucked into the second compressor 20B.

The flow of the refrigerant in the third refrigerant circuit 19C will be described. In the upstream-defrosting and heating mixed operation, the refrigerant sucked into the third compressor 20C is compressed into high-temperature, high-pressure gas refrigerant by the third compressor 20C and is then discharged therefrom. The high-temperature, high-pressure gas refrigerant discharged from the third compressor 20C passes through the third flow switching device 21C, enters the third heat-source heat exchanger 1C operating as a condenser, and defrosts the third heat-source heat exchanger 1C. The refrigerant leaving the third heat-source heat exchanger 1C enters the third expansion unit 22C. The refrigerant is expanded and reduced in pressure into low-temperature, low-pressure, two-phase gas-liquid refrigerant by the third expansion unit 22C. Then, the two-phase gas-liquid refrigerant enters the third refrigerant-to-heat medium heat exchanger 3C. In the third refrigerant-to-heat medium heat exchanger 3C, the refrigerant exchanges heat with the heat medium flowing through the first branch circuit 15A and thus evaporates into gas. The evaporated, low-temperature, low-pressure gas refrigerant passes through the third flow switching device 21C and is then sucked into the third compressor 20C.

The flow of the refrigerant in the fourth refrigerant circuit 19D will be described. In the upstream-defrosting and heating mixed operation, the refrigerant sucked into the fourth compressor 20D is compressed into high-temperature, high-pressure gas refrigerant by the fourth compressor 20D and is then discharged therefrom. The high-temperature, high-pressure gas refrigerant discharged from the fourth compressor 20D passes through the fourth flow switching device 21D, enters the fourth heat-source heat exchanger 1D operating as a condenser, and defrosts the fourth heat-source heat exchanger 1D. The refrigerant leaving the fourth heat-source heat exchanger 1D enters the fourth expansion unit 22D. The refrigerant is expanded and reduced in pressure into low-temperature, low-pressure, two-phase gas-liquid refrigerant by the fourth expansion unit 22D. Then, the two-phase gas-liquid refrigerant enters the fourth refrigerant-to-heat medium heat exchanger 3D. In the fourth refrigerant-to-heat medium heat exchanger 3D, the refrigerant exchanges heat with the heat medium flowing through the second branch circuit 15B and thus evaporates into gas. The evaporated, low-temperature, low-pressure gas refrigerant passes through the fourth flow switching device 21D and is then sucked into the fourth compressor 20D.

The flow of the heat medium in the heat medium circuit 15 will now be described. The heat medium flowing through the inlet circuit 16A is divided into two streams, which flow into the first branch circuit 15A and the second branch circuit 15B. Once in the first branch circuit 15A, the heat medium exchanges heat with the refrigerant flowing through the first refrigerant circuit 19A in the first refrigerant-to-heat medium heat exchanger 3A, so that the heat medium is heated. The heated heat medium further exchanges heat with the refrigerant flowing through the third refrigerant circuit 19C in the third refrigerant-to-heat medium heat exchanger 3C, so that the heat medium is slightly cooled. After that, the cooled heat medium enters the outlet circuit 16B. Once in the second branch circuit 15B, the heat medium exchanges heat with the refrigerant flowing through the second refrigerant circuit 19B in the second refrigerant-to-heat medium heat exchanger 3B, so that the heat medium is heated. The heated heat medium further exchanges heat with the refrigerant flowing through the fourth refrigerant circuit 19D in the fourth refrigerant-to-heat medium heat exchanger 3D, so that the heat medium is slightly cooled. After that, the cooled heat medium enters the outlet circuit 16B. The heat medium leaving the first branch circuit 15A and the heat medium leaving the second branch circuit 15B join together in the outlet circuit 16B. The high-temperature heat medium flowing through the outlet circuit 16B is sent and supplied to the use-side unit. Thus, heating is performed. As described above, in the downstream-defrosting and heating mixed operation mode, the defrosting operation is performed in the downstream system circuit 18B and the heating operation is performed in the upstream system circuit 18A, so that heating is continued while defrosting is being performed.

### (Control Unit 30)

The controller 30 is configured as dedicated hardware or a central processing unit (CPU) (also called a processing unit, an arithmetic unit, a microprocessor, a microcomputer, or a processor) that runs a program stored in a storage device. In the case where the controller 30 is dedicated hardware, the controller 30 corresponds to, for example, a single circuit, a composite circuit, an application specific integrated circuit (ASIC), a field-programmable gate array (FPGA), or a combination thereof. Functional parts that the controller 30 implements may be implemented by individual hardware components or may be implemented by a single hardware component.

In the case where the controller 30 is a CPU, functions that the controller 30 performs are implemented by software, firmware, or a combination of software and firmware. Software and firmware are described as programs and are stored in the storage device. The CPU reads the programs stored in the storage device and runs the programs, thus implementing the functions. A subset of the functions of the controller 30 may be implemented by dedicated hardware, and another subset thereof may be implemented by software or firmware. The storage device may be configured as a hard disk or a volatile storage device capable of temporarily storing data, for example, a random access memory (RAM). The storage device may be configured as a nonvolatile storage device capable of storing data for a long time, for example, a flash memory.

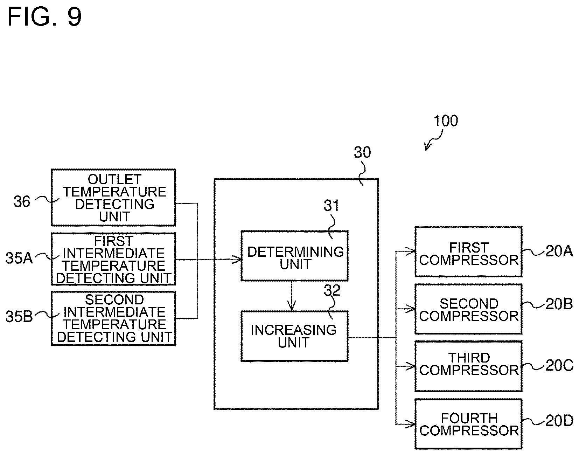

Fig. 9 is a functional block diagram of the controller 30 in Embodiment 1. As illustrated in Fig. 9, the controller 30 includes a determining unit 31 and an increasing unit 32. Each of the determining unit 31 and the increasing unit 32 is implemented by an algorithm.

### (Determining Unit 31)

The determining unit 31 determines whether the temperature of the heat medium measured by the outlet temperature detecting unit 36 is at or below a temperature threshold. The temperature threshold is set as a temperature that is expected not to achieve a heating capacity required by the use-side unit during the upstream-defrosting and heating mixed operation or the downstream-defrosting and heating mixed operation. Furthermore, the determining unit 31 determines whether the temperature of the heat medium measured by the first intermediate temperature detecting unit 35A and that measured by the second intermediate temperature detecting unit 35B are at or below an intermediate temperature threshold. The intermediate temperature threshold is set as a temperature that is expected not to achieve a heating capacity required by the use-side unit during the upstream-defrosting and heating mixed operation or the downstream-defrosting and heating mixed operation.

### (Increasing Unit 32)

The increasing unit 32 increases an operating frequency of the first compressor 20A, the second compressor 20B, the third compressor 20C, or the fourth compressor 20D when the determining unit 31 determines that the temperature of the heat medium is at or below the temperature threshold. Furthermore, the increasing unit 32 increases the operating frequency of the first compressor 20A, the second compressor 20B, the third compressor 20C, or the fourth compressor 20D when the determining unit 31 determines that the temperature of the heat medium is at or below the intermediate temperature threshold.

The increasing unit 32 increases the operating frequency of each of the third compressor 20C and the fourth compressor 20D in the upstream-defrosting and heating mixed operation mode. In the upstream-defrosting and heating mixed operation, the defrosting operation is performed in the first refrigerant circuit 19A and the second refrigerant circuit 19B included in the upstream system circuit 18A, and the heating operation is performed in the third refrigerant circuit 19C and the fourth refrigerant circuit 19D included in the downstream system circuit 18B. The increasing unit 32 increases the operating frequency of each of the third compressor 20C and the fourth compressor 20D in the downstream system circuit 18B, where the heating operation is performed, to increase the heating capacity, thus increasing the temperature of the heat medium. As described above, in the upstream-defrosting and heating mixed operation mode, the increasing unit 32 does not need to increase the operating frequency of each of the first compressor 20A and the second compressor 20B included in the upstream system circuit 18A.

The increasing unit 32 increases the operating frequency of each of the first compressor 20A and the second compressor 20B in the downstream-defrosting and heating mixed operation mode. In the downstream-defrosting and heating mixed operation, the heating operation is performed in the first refrigerant circuit 19A and the second refrigerant circuit 19B included in the upstream system circuit 18A, and the defrosting operation is performed in the third refrigerant circuit 19C and the fourth refrigerant circuit 19D included in the downstream system circuit 18B. The increasing unit 32 increases the operating frequency of each of the first compressor 20A and the second compressor 20B in the upstream system circuit 18A, where the heating operation is performed, to increase the heating capacity, thus increasing the temperature of the heat medium. As described above, in the downstream-defrosting and heating mixed operation mode, the increasing unit 32 does not need to increase the operating frequency of each of the third compressor 20C and the fourth compressor 20D included in the downstream system circuit 18B.

### (Operation of Control Unit 30)

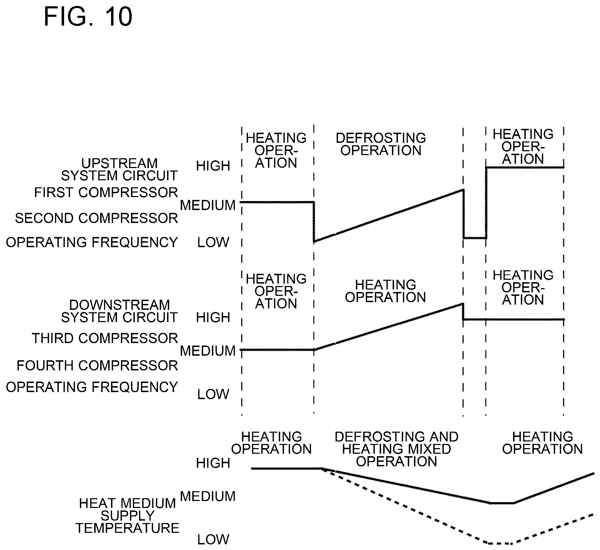

Fig. 10 is a timing chart illustrating an operation of the controller 30 in Embodiment 1. The operation of the controller 30 will now be described with reference to the timing chart. In Fig. 10, the horizontal axis represents time and the vertical axis represents the operating frequency of the compressors and a supply temperature of the heat medium. As illustrated in Fig. 10, while each of the upstream system circuit 18A and the downstream system circuit 18B is performing the heating operation, the operating frequency of each of the first compressor 20A, the second compressor 20B, the third compressor 20C, and the fourth compressor 20D is MEDIUM. At this time, the supply temperature of the heat medium is HIGH. After that, the upstream system circuit 18A performs the defrosting operation, and the downstream system circuit 18B performs the heating operation. At this time, the operating frequency of each of the first compressor 20A and the second compressor 20B in the upstream system circuit 18A is LOW, and the operating frequency of each of the third compressor 20C and the fourth compressor 20D in the downstream system circuit 18B remains MEDIUM.

If the determining unit 31 determines that the temperature of the heat medium is at or below the temperature threshold, the increasing unit 32 increases the operating frequency of each of the first compressor 20A, the second compressor 20B, the third compressor 20C, and the fourth compressor 20D. Thus, the operating frequency of each of the first compressor 20A and the second compressor 20B in the upstream system circuit 18A is increased to MEDIUM, and the operating frequency of each of the third compressor 20C and the fourth compressor 20D in the downstream system circuit 18B is increased to HIGH. At this time, the supply temperature of the heat medium gradually decreases from HIGH to MEDIUM as represented by a solid line in Fig. 10. If the increasing unit 32 does not increase the operating frequency of each of the first compressor 20A, the second compressor 20B, the third compressor 20C, and the fourth compressor 20D, the supply temperature of the heat medium will sharply decrease from HIGH to LOW as represented by a broken line in Fig. 10. After that, when the upstream system circuit 18A resumes the heating operation after completion of the defrosting operation in the upstream system circuit 18A, the operating frequency of each of the first compressor 20A, the second compressor 20B, the third compressor 20C, and the fourth compressor 20D is HIGH. Thus, the supply temperature of the heat medium increases to HIGH.

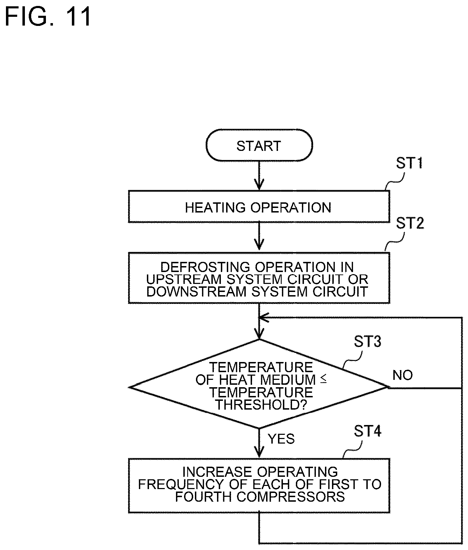

Fig. 11 is a flowchart illustrating the operation of the controller 30 in Embodiment 1. The operation of the controller 30 will now be described with reference to the flowchart. As illustrated in Fig. 11, while the air-conditioning system 200 is performing the heating operation (step ST1), the first heat-source heat exchanger 1A, the second heat-source heat exchanger 1B, the third heat-source heat exchanger 1C, and the fourth heat-source heat exchanger 1D may be frosted. In this case, the air-conditioning system 200 performs the defrosting operation in either one of the system circuits (step ST2). Then, the determining unit 31 determines whether the temperature of the heat medium measured by the outlet temperature detecting unit 36 is at or below the temperature threshold (step ST3). If the temperature of the heat medium is above the temperature threshold (NO in step ST3), the process returns to step ST3. If the temperature of the heat medium is at or below the temperature threshold (YES in step ST3), the increasing unit 32 increases the operating frequency of each of the first compressor 20A, the second compressor 20B, the third compressor 20C, and the fourth compressor 20D (step ST4). Then, the process returns to step ST3. The determining unit 31 may determine whether a temperature measured by the first intermediate temperature detecting unit 35A and a temperature measured by the second intermediate temperature detecting unit 35B are at or below the intermediate temperature threshold.

In Embodiment 1, if the temperature of the heat medium is at or below the temperature threshold, the increasing unit 32 increases the operating frequency of the first compressor 20A, the second compressor 20B, the third compressor 20C, or the fourth compressor 20D. Thus, the heating capacity can be increased to increase the temperature of the heat medium even in an operation in which the defrosting operation and the heating operation are performed in a mixed manner. Therefore, if the cooling operation or the defrosting operation and the heating operation are performed in a mixed manner, the air-conditioning target space in which the heating operation is required can be inhibited from cooling.

### Embodiment 2.

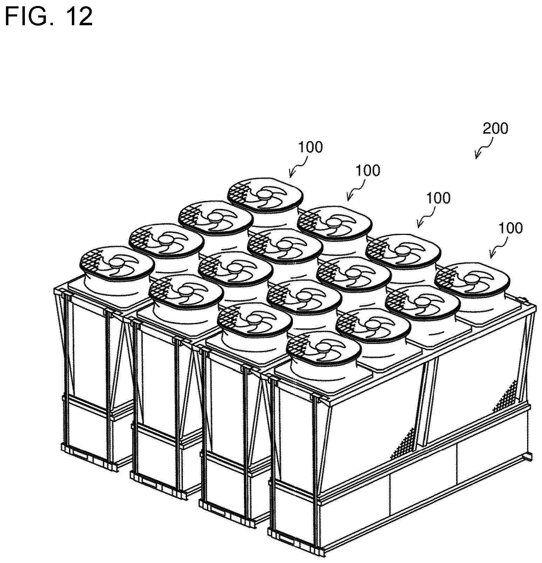

Fig. 12 is a perspective view of a plurality of chilling units 100 according to Embodiment 2. Embodiment 2 differs from Embodiment 1 in that an air-conditioning system 200 includes the plurality of chilling units 100. In Embodiment 2, components common to those in Embodiment 1 are designated by the same reference signs, and the description thereof is omitted. The following description will focus on the difference between Embodiment 2 and Embodiment 1.

As illustrated in Fig. 12, the chilling units 100 are arranged in a lateral direction of the chilling units 100. The chilling units 100 can be coupled together in this manner and used.

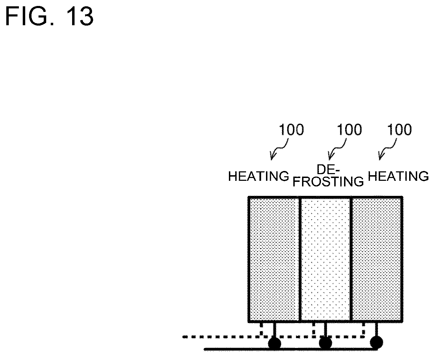

Fig. 13 is a schematic diagram illustrating a plurality of chilling units 100 according to Embodiment 2. As illustrated in Fig. 13, for example, of three chilling units 100, two chilling units 100 perform the heating operation, and one chilling unit 100 performs the defrosting operation. This case will be described. Each controller 30 calculates an average value of temperatures of streams of the heat medium flowing out of the three chilling units 100. Each increasing unit 32 increases, based on an outlet temperature measured by each of outlet temperature detecting units 36 included in the chilling units 100, an operating frequency of a corresponding one of first compressors 20A, a corresponding one of second compressors 20B, a corresponding one of third compressors 20C, or a corresponding one of fourth compressors 20D. This leads to an increase in temperature of the heat medium as a combination of the streams leaving the chilling units 100.

### Reference Signs List

1A: first heat-source heat exchanger, 1AE: edge, 1AL: long side portion, 1AS: short side portion, 1B: second heat-source heat exchanger, 1BE: edge, 1BL: long side portion, 1BS: short side portion, 1C: third heat-source heat exchanger, 1CE: edge, 1CL: long side portion, 1CS: short side portion, 1D: fourth heat-source heat exchanger, 1DE: edge, 1DL: long side portion, 1DS: short side portion, 3A: first refrigerant-to-heat medium heat exchanger, 3B: second refrigerant-to-heat medium heat exchanger, 3C: third refrigerant-to-heat medium heat exchanger, 3D: fourth refrigerant-to-heat medium heat exchanger, 4: machine chamber, 5A: first fan, 5B: second fan, 5C: third fan, 5D: fourth fan, 6: separator, 6A: first chamber, 6B: second chamber, 10: base, 15: heat medium circuit, 15A: first branch circuit, 15B: second branch circuit, 16A: inlet circuit, 16B: outlet circuit, 18A: upstream system circuit, 18B: downstream system circuit, 19A: first refrigerant circuit, 19B: second refrigerant circuit, 19C: third refrigerant circuit, 19D: fourth refrigerant circuit, 20A: first compressor, 20B: second compressor, 20C: third compressor, 20D: fourth compressor, 21A: first flow switching device, 21B: second flow switching device, 21C: third flow switching device, 21D: fourth flow switching device, 22A: first expansion unit, 22B: second expansion unit, 22C: third expansion unit, 22D: fourth expansion unit, 30: controller, 31: determining unit, 32: increasing unit, 35A: first intermediate temperature detecting unit, 35B: second intermediate temperature detecting unit, 36: outlet temperature detecting unit, 41: support, 42: pillars, 42A: pillar, 42B: pillar, 42C: pillar, 42D: pillar, 43: intermediate columns, 43A: intermediate column, 43B: intermediate column, 43C: intermediate column, 43D: intermediate column, 44: upper beam, 50: side panel, 51: side panel, 60: top frame, 70A: first refrigerant pipe, 70B: first refrigerant pipe, 70C: first refrigerant pipe, 70D: first refrigerant pipe, 71A: first branch pipe, 71B: second branch pipe, 100: chilling unit, 200: air-conditioning system

## Claims

1. A chilling unit comprising:
an upstream system circuit (18A) including a first refrigerant circuit (19A) in which a first compressor (20A), a first heat-source heat exchanger (1A), a first expansion unit (22A), and a first refrigerant-to-heat medium heat exchanger (3A) are connected by a first refrigerant pipe (70A) and through which refrigerant flows and a second refrigerant circuit (19B) in which a second compressor (20B), a second heat-source heat exchanger (1B), a second expansion unit (22B), and a second refrigerant-to-heat medium heat exchanger (3B) are connected by a second refrigerant pipe (70B) and through which refrigerant flows;
a downstream system circuit (18B) including a third refrigerant circuit (19C) in which a third compressor (20C), a third heat-source heat exchanger (1C), a third expansion unit (22C), and a third refrigerant-to-heat medium heat exchanger (3C) are connected by a third refrigerant pipe (70B) and through which refrigerant flows and a fourth refrigerant circuit (19D) in which a fourth compressor (20D), a fourth heat-source heat exchanger (1D), a fourth expansion unit (22D), and a fourth refrigerant-to-heat medium heat exchanger (3D) are connected by a fourth refrigerant pipe (70D) and through which refrigerant flows;
a heat medium circuit (15) including a first branch circuit (15A) in which the first refrigerant-to-heat medium heat exchanger (3A) and the third refrigerant-to-heat medium heat exchanger (3C) are connected in series by a first branch pipe (71A) and through which a heat medium flows in a direction from the first refrigerant-to-heat medium heat exchanger (3A) to the third refrigerant-to-heat medium heat exchanger (3C) and a second branch circuit (15B) in which the second refrigerant-to-heat medium heat exchanger (3B) and the fourth refrigerant-to-heat medium heat exchanger (3D) are connected in series by a second branch pipe (71B) and through which heat medium flows in a direction from the second refrigerant-to-heat medium heat exchanger (3B) to the fourth refrigerant-to-heat medium heat exchanger (3D);
an intermediate temperature detecting unit (35A, 35B) directly mounted to an outer circumferential surface of the first branch pipe (71A);
an outlet temperature detecting unit (36) disposed downstream of the third refrigerant-to-heat medium heat exchanger (3C) and the fourth refrigerant-to-heat medium heat exchanger (3D) in the heat medium circuit (15), the outlet temperature detecting unit (36) being configured to measure a temperature of the heat medium; and
a controller (30) configured to control operation of the first compressor (20A), the second compressor (20B), the third compressor (20C), and the fourth compressor (20D),
the controller (30) including
a determining unit (31) configured to determine whether the temperature of the heat medium measured by any one or more of the intermediate temperature detecting unit (35A, 35B) and the outlet temperature detecting unit (36) is at or below a temperature threshold, and
an increasing unit (32) configured to, when the determining unit (31) determines that the temperature of the heat medium is at or below the temperature threshold, increase an operating frequency of the first compressor (20A), the second compressor (20B), the third compressor (20C), or the fourth compressor (20D),
wherein
the controller (30) is configured to execute
a heating operation mode in which the refrigerant in the first refrigerant circuit (19A) flows through the first compressor (20A), the first refrigerant-to-heat medium heat exchanger (3A), the first expansion unit (22A), and the first heat-source heat exchanger (1A) in that order, the refrigerant in the second refrigerant circuit (19B) flows through the second compressor (20B), the second refrigerant-to-heat medium heat exchanger (3B), the second expansion unit (22B), and the second heat-source heat exchanger (1B) in that order, the refrigerant in the third refrigerant circuit (19C) flows through the third compressor (20C), the third refrigerant-to-heat medium heat exchanger (3C), the third expansion unit (22C), and the third heat-source heat exchanger (1C) in that order, and the refrigerant in the fourth refrigerant circuit (19D) flows through the fourth compressor (20D), the fourth refrigerant-to-heat medium heat exchanger (3D), the fourth expansion unit (22D), and the fourth heat-source heat exchanger (1D) in that order,
**characterized in that**
the controller (30) is configured to execute
an upstream-defrosting and heating mixed operation mode in which the refrigerant in the first refrigerant circuit (19A) flows through the first compressor (20A), the first heat-source heat exchanger (1A), the first expansion unit (22A), and the first refrigerant-to-heat medium heat exchanger (3A) **in that** order, the refrigerant in the second refrigerant circuit (19B) flows through the second compressor (20B), the second heat-source heat exchanger (1B), the second expansion unit (22B), the second refrigerant-to-heat medium heat exchanger (3B) **in that** order, the refrigerant in the third refrigerant circuit (19C) flows through the third compressor (20C), the third refrigerant-to-heat medium heat exchanger (3C), the third expansion unit (22C), and the third heat-source heat exchanger (1C) **in that** order, and the refrigerant in the fourth refrigerant circuit (19D) flows through the fourth compressor (20D), the fourth refrigerant-to-heat medium heat exchanger (3D), the fourth expansion unit (22D), and the fourth heat-source heat exchanger (1D) in that order, and
a downstream-defrosting and heating mixed operation mode in which the refrigerant in the second refrigerant circuit (19B) flows through the second compressor (20B), the second refrigerant-to-heat medium heat exchanger (3B), the second expansion unit (22B), and the second heat-source heat exchanger (2B) **in that** order, the refrigerant in the first refrigerant circuit (19A) flows through the first compressor (20A), the first refrigerant-to-heat medium heat exchanger (3A), the first expansion unit (22A), and the first heat-source heat exchanger (1A) **in that** order, the refrigerant in the fourth refrigerant circuit (19D) flows through the fourth compressor (20D), the fourth heat-source heat exchanger (1D), the fourth expansion unit (22D), and the fourth refrigerant-to-heat medium heat exchanger (3D) **in that** order, and the refrigerant in the third refrigerant circuit (19C) flows through the third compressor (20C), the third heat-source heat exchanger (1C), the third expansion unit (22C), and the third refrigerant-to-heat medium heat exchanger (3C), **in that** order.

2. The chilling unit of claim 1, further comprising:
a separator (6) separating a space surrounded by the first heat-source heat exchanger (1A), the second heat-source heat exchanger (1B), the third heat-source heat exchanger (1C), and the fourth heat-source heat exchanger (1D) into a first chamber (6A) containing the upstream system circuit (18A) and a second chamber (6B) containing the downstream system circuit (18B).

3. The chilling unit of claims 1 or 2, wherein the increasing unit (32) is configured to increase the operating frequency of each of the third compressor (20C) and the fourth compressor (20D) in the upstream-defrosting and heating mixed operation mode.

4. The chilling unit of any one of claims 1 to 3, wherein the increasing unit (32) is configured to increase the operating frequency of each of the first compressor (22A) and the second compressor (22B) in the downstream-defrosting and heating mixed operation mode.

5. An air-conditioning system comprising:
a plurality of chilling units (100) each comprising the chilling unit (100) of any one of claims 1 to 4,
wherein each of the increasing units is configured to increase, based on an outlet temperature measured by each of the outlet temperature detecting units (36) included in the plurality of chilling units (100), the operating frequency of a corresponding one of the first compressors (20A), a corresponding one of the second compressors (20B), a corresponding one of the third compressors (20C), or a corresponding one of the fourth compressors (20D).

## Patentansprüche

1. Kühleinheit, die aufweist:
einen stromaufwärtigen Systemkreislauf (18A), der einen ersten Kältemittelkreislauf (19A), in welchem ein erster Verdichter (20A), ein erster Wärmequellen-Wärmetauscher (1A), eine erste Expansionseinheit (22A) und ein erster Kältemittel-Wärmemedium-Wärmetauscher (3A) durch eine erste Kältemittelleitung (70A) verbunden sind und durch den ein Kältemittel strömt, und einen zweiten Kältemittelkreislauf (19B) umfasst, in welchem ein zweiter Verdichter (20B), ein zweiter Wärmequellen-Wärmetauscher (1B), eine zweite Expansionseinheit (22B) und ein zweiter Kältemittel-Wärmemedium-Wärmetauscher (3B) durch eine zweite Kältemittelleitung (70B) verbunden sind und durch den ein Kältemittel strömt;
einen stromabwärtigen Systemkreislauf (18B), der einen dritten Kältemittelkreislauf (19C), in welchem ein dritter Verdichter (20C), ein dritter Wärmequellen-Wärmetauscher (1C), eine dritte Expansionseinheit (22C) und ein dritter Kältemittel-Wärmemedium-Wärmetauscher (3C) durch eine dritte Kältemittelleitung (70C) verbunden sind und durch den ein Kältemittel strömt, und einen vierten Kältemittelkreislauf (19D) umfasst, in welchem ein vierter Verdichter (20D), ein vierter Wärmequellen-Wärmetauscher (1D), eine vierte Expansionseinheit (22D) und ein vierter Kältemittel-Wärmemedium-Wärmetauscher (3D) durch eine vierte Kältemittelleitung (70D) verbunden sind und durch den ein Kältemittel strömt;
einen Wärmemediumkreislauf (15), der einen ersten Zweigkreislauf (15A), in welchem der erste Kältemittel-Wärmemedium-Wärmetauscher (3A) und der dritte Kältemittel-Wärmemedium-Wärmetauscher (3C) durch eine erste Zweigleitung (71A) in Reihe geschaltet sind und durch den ein Wärmemedium in einer Richtung von dem ersten Kältemittel-Wärmemedium-Wärmetauscher (3A) zu dem dritten Kältemittel-Wärmemedium-Wärmetauscher (3C) strömt, und einen zweiten Zweigkreislauf (15B) umfasst, in welchem der zweite Kältemittel-Wärmemedium-Wärmetauscher (3B) und der vierte Kältemittel-Wärmemedium-Wärmetauscher (3D) durch eine zweite Zweigleitung (71B) in Reihe geschaltet sind und durch den ein Wärmemedium in einer Richtung von dem zweiten Kältemittel-Wärmemedium-Wärmetauscher (3B) zu dem vierten Kältemittel-Wärmemedium-Wärmetauscher (3D) strömt;
eine Zwischentemperaturerfassungseinheit (35A, 35B), die direkt an einer Außenumfangsfläche der ersten Zweigleitung (71A) montiert ist;
eine Auslasstemperaturerfassungseinheit (36), die stromabwärts von dem dritten Kältemittel-Wärmemedium-Wärmetauscher (3C) und dem vierten Kältemittel-Wärmemedium-Wärmetauscher (3D) im Wärmemediumkreislauf (15) angeordnet ist, wobei die Auslasstemperaturerfassungseinheit (36) eingerichtet ist, eine Temperatur des Wärmemediums zu messen; und
eine Steuerung (30), die eingerichtet ist, eine Betriebsweise des ersten Verdichters (20A), des zweiten Verdichters (20B), des dritten Verdichters (20C) und des vierten Verdichters (20D) zu steuern,
wobei die Steuerung (30) umfasst
eine Bestimmungseinheit (31), die zum Bestimmen eingerichtet ist, ob die Temperatur des Wärmemediums, die von der Zwischentemperaturerfassungseinheit (35A, 35B) und/oder der Auslasstemperaturerfassungseinheit (36) gemessen wird, bei oder unter einem Temperaturschwellenwert liegt, und
eine Erhöhungseinheit (32), die eingerichtet ist, wenn die Bestimmungseinheit (31) bestimmt, dass die Temperatur des Wärmemediums bei oder unter dem Temperaturschwellenwert liegt, eine Betriebsfrequenz des ersten Verdichters (20A), des zweiten Verdichters (20B), des dritten Verdichters (20C) oder des vierten Verdichters (20D) zu erhöhen,
wobei die Steuerung (30) zum Ausführen eingerichtet ist von
einem Heizbetriebsmodus, in welchem das Kältemittel im ersten Kältemittelkreislauf (19A), hinsichtlich einer Reihenfolge, durch den ersten Verdichter (20A), den ersten Kältemittel-Wärmemedium-Wärmetauscher (3A), die erste Expansionseinheit (22A) und den ersten Wärmequellen-Wärmetauscher (1A) strömt, wobei das Kältemittel im zweiten Kältemittelkreislauf (19B), hinsichtlich einer Reihenfolge, durch den zweiten Verdichter (20B), den zweiten Kältemittel-Wärmemedium-Wärmetauscher (3B), die zweite Expansionseinheit (22B) und den zweiten Wärmequellen-Wärmetauscher (1B) strömt, wobei das Kältemittel im dritten Kältemittelkreislauf (19C), hinsichtlich einer Reihenfolge, durch den dritten Verdichter (20C), den dritten Kältemittel-Wärmemedium-Wärmetauscher (3C), die dritte Expansionseinheit (22C) und den dritten Wärmequellen-Wärmetauscher (1C) strömt und wobei das Kältemittel im vierten Kältemittelkreislauf (19D), hinsichtlich einer Reihenfolge, durch den vierten Verdichter (20D), den vierten Kältemittel-Wärmemedium-Wärmetauscher (3D), die vierte Expansionseinheit (22D) und den vierten Wärmequellen-Wärmetauscher (1D) strömt,
**dadurch gekennzeichnet, dass**
die Steuerung (30) zum Ausführen eingerichtet ist von
einem stromaufwärtigen Abtau- und Heizmischmodus, in welchem das Kältemittel im ersten Kältemittelkreislauf (19A), hinsichtlich einer Reihenfolge, durch den ersten Verdichter (20A), den ersten Wärmequellen-Wärmetauscher (1A), die erste Expansionseinheit (22A) und den ersten Kältemittel-Wärmemedium-Wärmetauscher (3A) strömt, wobei das Kältemittel im zweiten Kältemittelkreislauf (19B), hinsichtlich einer Reihenfolge, durch den zweiten Verdichter (20B), den zweiten Wärmequellen-Wärmetauscher (1B), die zweite Expansionseinheit (22B) und den zweiten Kältemittel-Wärmemedium-Wärmetauscher (3B) strömt, wobei das Kältemittel im dritten Kältemittelkreislauf (19C), hinsichtlich einer Reihenfolge, durch den dritten Verdichter (20C), den dritten Kältemittel-Wärmemedium-Wärmetauscher (3C), die dritte Expansionseinheit (22C) und den dritten Wärmequellen-Wärmetauscher (1C) strömt und wobei das Kältemittel im vierten Kältemittelkreislauf (19D), hinsichtlich einer Reihenfolge, durch den vierten Verdichter (20D), den vierten Kältemittel-Wärmemedium-Wärmetauscher (3D), die vierte Expansionseinheit (22D) und den vierten Wärmequellen-Wärmetauscher (1D) strömt, und
einem stromabwärtigen Abtau- und Heizmischmodus, in welchem das Kältemittel im zweiten Kältemittelkreislauf (19B), hinsichtlich einer Reihenfolge, durch den zweiten Verdichter (20B), den zweiten Kältemittel-Wärmemedium-Wärmetauscher (3B), die zweite Expansionseinheit (22B) und den zweiten Wärmequellen-Wärmetauscher (2B) strömt, wobei das Kältemittel im ersten Kältemittelkreislauf (19A), hinsichtlich einer Reihenfolge, durch den ersten Verdichter (20A), den ersten Kältemittel-Wärmemedium-Wärmetauscher (3A), die erste Expansionseinheit (22A) und den ersten Wärmequellen-Wärmetauscher (1A) strömt, wobei das Kältemittel im vierten Kältemittelkreislauf (19D), hinsichtlich einer Reihenfolge, durch den vierten Verdichter (20D), den vierten Wärmequellen-Wärmetauscher (1D), die vierte Expansionseinheit (22D) und den vierten Kältemittel-Wärmemedium-Wärmetauscher (3D) strömt und wobei das Kältemittel im dritten Kältemittelkreislauf (19C), hinsichtlich einer Reihenfolge, durch den dritten Verdichter (20C), den dritten Wärmequellen-Wärmetauscher (1C), die dritte Expansionseinheit (22C) und den dritten Kältemittel-Wärmemedium-Wärmetauscher (3C) strömt.

2. Kühleinheit nach Anspruch 1, die ferner aufweist:
Eine Trenneinrichtung (6), die einen von dem ersten Wärmequellen-Wärmetauscher (1A), dem zweiten Wärmequellen-Wärmetauscher (1B), dem dritten v (1C) und dem vierten Wärmequellen-Wärmetauscher (1D) umgebenen Raum in eine erste Kammer (6A), die den stromaufwärtigen Systemkreislauf (18A) enthält, und in eine zweite Kammer (6B) trennt, die den stromabwärtigen Systemkreislauf (18B) enthält.

3. Kühleinheit nach Anspruch 1 oder 2, wobei die Erhöhungseinheit (32) eingerichtet ist, die Betriebsfrequenz sowohl des dritten Verdichters (20C) als auch des vierten Verdichters (20D) in dem stromaufwärtigen Abtau- und Heizmischmodus zu erhöhen.

4. Kühleinheit nach einem der Ansprüche 1 bis 3, wobei die Erhöhungseinheit (32) eingerichtet ist, die Betriebsfrequenz sowohl des ersten Verdichters (20A) als auch des zweiten Verdichters (20B) in dem stromabwärtigen Abtau- und Heizmischmodus zu erhöhen.

5. Klimaanlagensystem, das aufweist:
eine Vielzahl von Kühleinheiten (100), die jeweils die Kühleinheit (100) nach einem der Ansprüche 1 bis 4 umfassen, wobei jede der Erhöhungseinheiten eingerichtet ist, basierend auf einer Auslasstemperatur, die von jeder der in der Vielzahl von Kühleinheiten (100) umfassten Auslasstemperaturerfassungseinheiten (36) gemessen wird, die Betriebsfrequenz eines entsprechenden der ersten Verdichter (20A), eines entsprechenden der zweiten Verdichter (20B), eines entsprechenden der dritten Verdichter (20C) oder eines entsprechenden der vierten Verdichter (20D) zu erhöhen.

## Revendications

1. Appareil de refroidissement comprenant :
un circuit de système en amont (18A) comportant un premier circuit de réfrigérant (19A) dans lequel un premier compresseur (20A), un premier échangeur de chaleur de source de chaleur (1A), une première unité de détente (22A) et un premier échangeur de chaleur fluide frigorigène/milieu chauffant (3A) sont connectés par un premier tuyau de réfrigérant (70A) et à travers lequel circule le réfrigérant et un second circuit de réfrigérant (19B) dans lequel un second compresseur (20B), un second échangeur de chaleur de source de chaleur (1B), une seconde unité de détente (22B) et un second échangeur de chaleur fluide frigorigène/milieu chauffant (3B) sont raccordés par un second tuyau de réfrigérant (70B) et à travers lequel circule le réfrigérant ;
un circuit de système en aval (18B) comportant un troisième circuit de réfrigérant (19C) dans lequel un troisième compresseur (20C), un troisième échangeur de chaleur de source de chaleur (1C), une troisième unité de détente (22C) et un troisième échangeur de chaleur fluide frigorigène/milieu chauffant (3C) sont connectés par un troisième tuyau de réfrigérant (70B) et à travers lequel circule le réfrigérant et un quatrième circuit de réfrigérant (19D) dans lequel un quatrième compresseur (20D), un quatrième échangeur de chaleur de source de chaleur (1D), une quatrième unité de détente (22D) et un quatrième échangeur de chaleur fluide frigorigène/milieu chauffant (3D) sont raccordés par un quatrième tuyau de réfrigérant (70D) et à travers lequel circule le réfrigérant ;
un circuit de fluide thermique (15) comportant un premier circuit de dérivation (15A) dans lequel le premier échangeur de chaleur fluide frigorigène/milieu chauffant (3A) et le troisième échangeur de chaleur fluide frigorigène/milieu chauffant (3C) sont connectés en série par un premier tuyau de dérivation (71A) et à travers lequel un milieu thermique s'écoule dans une direction allant du premier échangeur de chaleur fluide frigorigène/milieu chauffant (3A) au troisième échangeur de chaleur fluide frigorigène/milieu chauffant (3C) et un second circuit de dérivation (15B) dans lequel le deuxième échangeur de chaleur fluide frigorigène/milieu chauffant (3B) et le quatrième échangeur de chaleur fluide frigorigène/milieu chauffant (3D) sont reliés en série par un second tuyau de dérivation (71B) et à travers lequel le fluide thermique s'écoule dans une direction allant du deuxième échangeur de chaleur fluide frigorigène/milieu chauffant (3B) au quatrième échangeur de chaleur fluide frigorigène/milieu chauffant (3D) ;
une unité de détection de température intermédiaire (35A, 35B) directement montée sur une surface circonférentielle extérieure du premier tuyau de dérivation (71A) ;
une unité de détection de température de sortie (36) disposée en aval du troisième échangeur de chaleur fluide frigorigène/milieu chauffant (3C) et du quatrième échangeur de chaleur fluide frigorigène/milieu chauffant (3D) dans le circuit de fluide thermique (15), l'unité de détection de température de sortie (36) étant configurée pour mesurer une température du fluide thermique ; et
un dispositif de commande (30) configuré pour commander le fonctionnement du premier compresseur (20A), du deuxième compresseur (20B), du troisième compresseur (20C) et du quatrième compresseur (20D),
le dispositif de commande (30) comportant
une unité de détermination (31) configurée pour déterminer si la température du fluide thermique mesurée par l'une quelconque ou des unités de détection de température intermédiaire (35A, 35B) et des unités de détection de température de sortie (36) est égale ou inférieure à un seuil de température, et
une unité d'augmentation (32) configurée pour, lorsque l'unité de détermination (31) détermine que la température du fluide thermique est égale ou inférieure au seuil de température, augmenter une fréquence de fonctionnement du premier compresseur (20A), du deuxième compresseur (20B), du troisième compresseur (20C) ou du quatrième compresseur (20D),
dans lequel
le dispositif de commande (30) est configuré pour exécuter un mode de fonctionnement de chauffage dans lequel le réfrigérant dans le premier circuit de réfrigérant (19A) traverse le premier compresseur (20A), le premier échangeur de chaleur fluide frigorigène/milieu chauffant (3A), la première unité de détente (22A) et le premier échangeur de chaleur de source de chaleur (1A) dans cet ordre, le réfrigérant dans le second circuit de réfrigérant (19B) s'écoule à travers le second compresseur (20B), le second échangeur de chaleur fluide frigorigène/milieu chauffant (3B), la seconde unité de détente (22B) et le second échangeur de chaleur de source de chaleur (1B) dans cet ordre, le réfrigérant dans le troisième circuit de réfrigérant (19C) traverse le troisième compresseur (20C), le troisième échangeur de chaleur fluide frigorigène/milieu chauffant (3C), la troisième unité de détente (22C) et le troisième échangeur de chaleur de source de chaleur (1C) dans cet ordre, et le réfrigérant dans le quatrième circuit de réfrigérant (19D) traverse le quatrième compresseur (20D), le quatrième échangeur de chaleur fluide frigorigène/milieu chauffant (3D), la quatrième unité de détente (22D) et le quatrième échangeur de chaleur de source de chaleur (1D) dans cet ordre,
**caractérisé en ce que**
le dispositif de commande (30) est configuré pour exécuter :
un mode de fonctionnement mixte de dégivrage et de chauffage en amont dans lequel le réfrigérant dans le premier circuit de réfrigérant (19A) traverse le premier compresseur (20A), le premier échangeur de chaleur de source de chaleur (1A), la première unité de détente (22A) et le premier échangeur de chaleur fluide frigorigène/milieu chauffant (3A) dans cet ordre, le réfrigérant dans le second circuit de réfrigérant (19B) s'écoule à travers le second compresseur (20B), le second échangeur de chaleur de source de chaleur (1B), la seconde unité de détente (22B), le second échangeur de chaleur fluide frigorigène/milieu chauffant (3B) dans cet ordre, le réfrigérant dans le troisième circuit de réfrigérant (19C) traverse le troisième compresseur (20C), le troisième échangeur de chaleur fluide frigorigène/milieu chauffant (3C), la troisième unité de détente (22C) et le troisième échangeur de chaleur de source de chaleur (1C) dans cet ordre, et le réfrigérant dans le quatrième circuit de réfrigérant (19D) traverse le quatrième compresseur (20D), le quatrième échangeur de chaleur fluide frigorigène/milieu chauffant (3D), la quatrième unité de détente (22D) et le quatrième échangeur de chaleur de source de chaleur (1D) dans cet ordre, et
un mode de fonctionnement mixte de dégivrage et de chauffage en aval dans lequel le réfrigérant dans le second circuit de réfrigérant (19B) traverse le second compresseur (20B), le second échangeur de chaleur fluide frigorigène/milieu chauffant (3B), la seconde unité de détente (22B) et le second échangeur de chaleur de source de chaleur (2B) dans cet ordre, le réfrigérant dans le premier circuit de réfrigérant (19A) traverse le premier compresseur (20A), le premier échangeur de chaleur fluide frigorigène/milieu chauffant (3A), la première unité de détente (22A) et le premier échangeur de chaleur de source de chaleur (1A) dans cet ordre, le réfrigérant dans le quatrième circuit de réfrigérant (19D) traverse le quatrième compresseur (20D), le quatrième échangeur de chaleur de source de chaleur (1D), la quatrième unité de détente (22D) et le quatrième échangeur de chaleur fluide frigorigène/milieu chauffant (3D) dans cet ordre, et le réfrigérant dans le troisième circuit de réfrigérant (19C) traverse le troisième compresseur (20C), le troisième échangeur de chaleur de source de chaleur (1C), la troisième unité de détente (22C) et le troisième échangeur de chaleur fluide frigorigène/milieu chauffant (3C), dans cet ordre.

2. Appareil de refroidissement selon la revendication 1, comprenant en outre :
un séparateur (6) séparant un espace entouré par le premier échangeur de chaleur de source de chaleur (1A), le deuxième échangeur de chaleur de source de chaleur (1B), le troisième échangeur de chaleur de source de chaleur (1C) et le quatrième échangeur de chaleur de source de chaleur (1D) en une première chambre (6A) contenant le circuit de système en amont (18A) et une seconde chambre (6B) contenant le circuit de système en aval (18B).

3. Appareil de refroidissement selon les revendications 1 ou 2, dans lequel l'unité d'augmentation (32) est configurée pour augmenter la fréquence de fonctionnement de chacun du troisième compresseur (20C) et du quatrième compresseur (20D) dans le mode de fonctionnement mixte de dégivrage et de chauffage en amont.

4. Appareil de refroidissement selon l'une quelconque des revendications 1 à 3, dans lequel l'unité d'augmentation (32) est configurée pour augmenter la fréquence de fonctionnement de chacun du premier compresseur (22A) et du deuxième compresseur (22B) dans le mode de fonctionnement mixte de dégivrage et de chauffage en aval.

5. Système de climatisation comprenant :
une pluralité d'appareils de refroidissement (100) comprenant chacun l'appareil de refroidissement (100) selon l'une quelconque des revendications 1 à 4,
dans lequel chacune des unités d'augmentation est configurée pour augmenter, sur la base d'une température de sortie mesurée par chacune des unités de détection de température de sortie (36) incluses dans la pluralité d'appareils de refroidissement (100), la fréquence de fonctionnement d'un correspondant parmi les premiers compresseurs (20A), d'un correspondant parmi les deuxièmes compresseurs (20B), d'un correspondant parmi les troisièmes compresseurs (20C), ou d'un correspondant parmi les quatrièmes compresseurs (20D).
